(19) Europäisches Patentamt / European Patent Office / Office européen des brevets

(11) EP 1 308 466 B1

(12) **EUROPEAN PATENT SPECIFICATION**

(45) Date of publication and mention of the grant of the patent: **28.02.2007 Bulletin 2007/09**

(21) Application number: **01945795.1**

(22) Date of filing: **03.07.2001**

(51) Int Cl.:
*C08F 210/08* (2006.01) *C08F 4/654* (2006.01)
*C08L 23/20* (2006.01) *C08F 10/08* (2006.01)
*C08J 5/00* (2006.01) *C08F 220/08* (2006.01)

(86) International application number: **PCT/JP2001/005760**

(87) International publication number: **WO 2002/002659 (10.01.2002 Gazette 2002/02)**

(54) **BUTENE COPOLYMER, RESIN COMPOSITION COMPRISING THE COPOLYMER AND MOLDINGS OF THE COMPOSITION**

BUTENCOPOLYMER, HARZZUSAMMENSETZUNG DIE DIESES ENTHÄLT SOWIE FORMMASSEN AUS DER ZUSAMMENSETZUNG

COPOLYMERE DE BUTENE, COMPOSITION DE RESINE RENFERMANT CE COPOLYMERE ET PRODUITS MOULES DE CETTE COMPOSITION

(84) Designated Contracting States: **DE GB NL**

(30) Priority: **03.07.2000 JP 2000200734**

(43) Date of publication of application: **07.05.2003 Bulletin 2003/19**

(73) Proprietor: **Mitsui Chemicals, Inc.**
**Tokyo (JP)**

(72) Inventors:
- **TOKUI, Shin**
  **Ichihara-shi,**
  **Chiba 299-0108 (JP)**
- **TSUTSUI, Toshiyuki,**
  **Mitsui Chemicals, Inc.**
  **Kuga-gun,**
  **Yamaguchi 740-0061 (JP)**

(74) Representative: **HOFFMANN EITLE**
**Patent- und Rechtsanwälte**
**Arabellastrasse 4**
**81925 München (DE)**

(56) References cited:
**EP-A- 0 186 287**
**EP-A1- 0 135 358**
**EP-A1- 0 172 961**
**EP-A1- 0 353 319**
**EP-A1- 0 585 869**
**JP-A- 9 302 038**
**JP-A- 62 119 213**
**US-A- 4 778 870**
**US-A- 5 336 747**
**US-A- 5 385 998**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Field of the Invention

The present invention relates to a butene copolymer, a resin composition comprising the butene copolymer and a molded item from the butene copolymer or resin composition thereof. More particularly, the present invention relates to a butene copolymer which is excellent in heat resistance, thermal creep properties and handling easiness after molding and which can provide a molded item having appropriate rigidity and excellent low-temperature properties, and relates to a resin composition comprising the butene copolymer and a molded item from the butene copolymer or resin composition thereof.

### Background of the Invention

A galvanized steel pipe, a copper pipe, a lead pipe and other metal pipes are commonly used as a water supply or hot water supply piping element. However, a steel pipe has a drawback in that it rusts to cause occurrence of a red water or black water. A copper pipe has a drawback in that it suffers electrolytic corrosion to thereby cause the pipe to have pin holes and further cause occurrence of a bluewater. Moreover, such a water supply or hot water supply piping element has such drawbacks that the weight reduction thereof is difficult and it is not easy to achieve an increase of pipe diameter. Therefore, a novel piping material has been demanded. Already, in some areas, use is made of synthetic resin pipes constituted of polyvinyl chloride, polyethylene, crosslinked polyethylene, poly-1-butene, etc. , which are free from rusting and electrolytic corrosion leading to pin holes.

However, the polyvinyl chloride lacks a flexibility as a resin and raises sanitary and environmental problems. The polyethylene raises such a problem that the pressure resistance and long-term durability thereof are poor.

The poly-1-butene is excellent in pressure resistance strength, internal pressure creep durability at high temperature (40 to 120°C), high/low temperature properties and abrasion/wear resistance and is also excellent in flexibility, so that it is a resin suitable for use in water supply/hot water supply pipes. However, the poly-1-butene is slightly unsatisfactory in a balance between flexibility and heat resistance and a balance between rigidity and low-temperature properties. Further, upon melt molding of the poly-1-butene, the molded item is characterized in that the properties thereof are slowly changed and days or ten-odd days are needed before the molded item exhibits stable properties, thereby raising a problem of difficult handling.

Therefore, there has been a demand for the development of a resin of higher level performance which, while retaining appropriate rigidity and flexibility, is excellent in a balance of rigidity, etc. and is improved with respect to the handling easiness of molded item.

The inventors presented in a prior application (Japanese Patent Laid-open Publication No. 9(1997) -302038) that a butene-propylene copolymer whose propylene content, crystal melting point, tensile modulus, intrinsic viscosity and n-decane soluble content are controlled so as to fall within specified ranges, or the molding of a resin composition comprising the butene-propylene copolymer is excellent in pressure resistance, heat resistance, rigidity, low-temperature properties, molded item handling easiness and dust adherence causing a lowering of handling property, so that the butene-propylene copolymer can be a substitute for the poly-1-butene.

The butene-propylene copolymer, although various improvements can be certainly recognized, has such a problem that the heat resistance, rigidity and thermal creep properties thereof are still not satisfactory.

Apart from the above, a catalyst comprising a titanium compound supported on a magnesium halide being in the active state is known as a catalyst for use in the production of an olefin polymer such as an ethylene homopolymer, an α-olefin homopolymer or an ethylene/α-olefin copolymer. For example, a catalyst comprising a solid titanium catalyst component, composed of magnesium, titanium, a halogen and an electron donor, and an organometallic compound catalyst component is known.

Various proposals have been presented with respect to the solid titanium catalyst component comprising magnesium, titanium, a halogen and an electron donor. It is also known that a highly stereospecific polymer of an α-olefin having 3 or more carbon atoms can be produced in high yield with the use of the solid titanium catalyst component.

For the production of this solid titanium catalyst component, there is known, for example, a process wherein a hydrocarbon solution of halogenous magnesium compound and a liquid titanium compound are brought into contact with each other to thereby form a solid product. Further, there is known a process wherein a solid product is formed from a hydrocarbon solution containing a magnesium halide compound and a titanium compound in the presence of at least one electron donor selected from the group consisting of a polycarboxylic acid, a monocarboxylic acid ester, a polycarboxylic acid ester, a polyhydroxy compound ester, an acid anhydride, a ketone, a fatty acid ether, a fatty acid carbonate, an alcohol having an alkoxy group, an alcohol having an aryloxy group, an organosilicon compound having Si-O-C bond and an organophosphorus compound having P-O-C bond.

In particular, it is known that an α-olefin (co) polymer of uniform particle diameter and low fine powder content

can be obtained when polymerization is performed in the presence of a solid titanium catalyst produced with the use of a carboxylic acid or a derivative thereof (for example, phthalic anhydride or the like; hereinafter may be referred to simply as "carboxylic acid derivative") as the electron donor.

Further, there has been proposed a process for producing an α-olefin polymer of narrower particle size distribution, less fine powder content and greater bulk density in the presence of a solid titanium catalyst comprising in a specific composition of magnesium, titanium, a halogen, a compound having at least two ether bonds between which a plurality of atoms are present (hereinafter may be referred to simply as "polyether"), a hydrocarbon and an electron donor other than the polyether (Japanese Patent Laid-open Publication No. 6(1994)-336503).

It is true that a propylene polymer of highly excellent properties can be obtained with the use of this solid titanium catalyst. However, the inventors have found that the polymerization of 1-butene in the presence of the solid titanium catalyst raises such problems that 1-butene is isomerized into 2-butene to thereby invite a drop of polymerization activity, and that a carboxylic acid derivative inhibits the action of a stabilizer in α-olefin polymer to thereby cause a long-term strength to be unsatisfactory.

## Disclosure of the Invention

Accordingly, the first object of the present invention is to provide a butene copolymer (A) which enables enhancing the rigidity, low-temperature property and thermal creep property of a molded item and to provide a resin composition comprising the butene copolymer (A).

The second obj ect of the present invention is to provide a molding of the butene copolymer (A) and a molding of the resin composition comprising the butene copolymer (A), which moldings exhibit excellent rigidity, low-temperature property and thermal creep property.

Therefore, according to the first aspect of the present invention, there is provided a butene copolymer (A) comprising 99.9 to 80 mol% of copolymer units (a) derived from 1-butene and 0. 1 to 20 mol% of copolymer units (b) derived from an α-olefin having 3 to 10 carbon atoms (provided that 1-butene is excluded), this butene copolymer (A) having:

(1a) a tensile modulus E (measured at 23°C) of 345 MPa or greater and/or
(1b) a tensile modulus E (measured at 95°C) of 133 MPa or greater, and
(2) a ratio (Mw/Mn) of weight-average molecular weight (Mw) to number-average molecular weight (Mn) of 2 to 30,
(3) an intrinsic viscosity [η] (measured in decalin as a solvent at 135°C) of 1 to 6 dl/g, and
(4) a melting point Tm (measured by a differential scanning calorimeter) of 150°C or below.

According to the second aspect of the present invention, there is provided the butene copolymer (A) as defined in the first aspect of the present invention, wherein the tensile modulus E (measured at 23°C) satisfies the relationship:

$$E\ (\mathrm{MPa}) > 370 - 6.67 \times (\text{content of } \alpha\text{-olefin having 3 to 10 carbon atoms (provided that 1-butene is excluded)})$$

to 10 carbon atoms (provided that 1-butene is excluded))
wherein the content of α-olefin having 3 to 10 carbon atoms (provided that 1-butene is excluded) is molar percentage based on the butene copolymer (A).

According to the third aspect of the present invention, there is provided the butene copolymer (A) as defined in the first or second aspect of the present invention, which exhibits a 1/2 crystal transition time (measured by X-xay diffractometry) of 40 hr or less.

The butene copolymer (A) as defined in any of the first to third aspects of the present invention exhibits:

B value determined by $^{13}$C-NMR of 0.92 to 1.1, this B value calculated by the formula:

$$B\ \text{value} = P_{OB}/(2P_O \cdot P_B)$$

wherein $P_{OB}$ represents the ratio of the number of butene-α-olefin chains to the total number of chains, $P_B$ represents the molar fraction of butene component, and $P_O$ represents the molar fraction of α-olefin component, and

an isotactic pentad fraction determined by $^{13}C$-NMR of 91% or greater.

According to the fourth aspect of the present invention, there is provided the butene copolymer (A) as defined in any of the first to third aspects of the present invention, wherein the ratio (Mw/Mn) of weight-average molecular weight (Mw) to number-average molecular weight (Mn) is in the range of 2 to 7.9.

According to the fifth aspect of the present invention, there is provided the butene copolymer (A) as defined in any of the first to fourth aspects of the present invention, wherein the copolymer units (b) derived from an α-olefin having 2 to 10 carbon atoms (provided that 1-butene is excluded) are propylene units.

According to the sixth aspect of the present invention, there is provided the butene copolymer (A) as defined in any of the first to fifth aspects of the present invention, which exhibits only one endothermic peak (melting point Tm) in a measurement by means of a differential scanning calorimeter.

According to the seventh aspect of the present invention, there is provided the butene copolymer (A) as defined in any of the first to sixth aspects of the present invention, produced with the use of a catalyst system comprising:

a solid titanium catalyst component (c) containing titanium, magnesium, a halogen and a compound having at least two ether bonds represented by the formula:

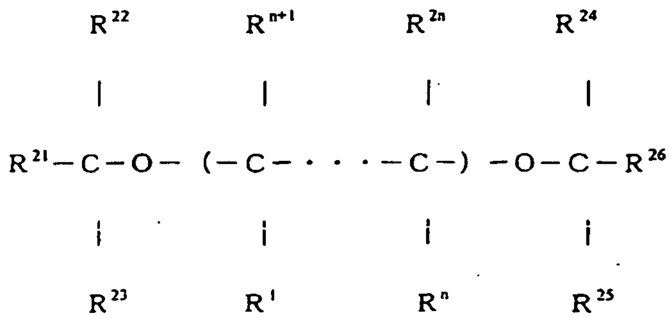

wherein each of $R^1$ to $R^{26}$ represents a substituent having at least one element selected from the group consisting of carbon, hydrogen, oxygen, a halogen, nitrogen, sulfur, phosphorus, boron and silicon, provided that any $R^1$ to $R^{26}$ substituents may form a ring other than benzene ring and that an atom other than carbon may be contained in a main chain of the compound having at least two ether bonds, and wherein n is an integer satisfying the relationship $2 \leq n \leq 10$; and an organometallic compound catalyst component (d) containing a metal of Groups I to III of the periodic table.

According to the eighth aspect of the present invention, there is provided a butene copolymer resin composition comprising a butene copolymer (A) comprising 99. 9 to 80 mol% of copolymer units (a) derived from 1-butene and 0.1 to 20 mol% of copolymer units (b) derived from an α-olefin having 3 to 10 carbon atoms (provided that 1-butene is excluded), this butene copolymer resin composition having:

(1a) a tensile modulus E (measured at 23°C) of 360 MPa or greater and/or

(1b) a tensile modulus E (measured at 95°C) of 138 MPa or greater, and

(2) a ratio (Mw/Mn) of weight-average molecular weight (Mw) to number-average molecular weight (Mn) of 2 to 30,

(3) an intrinsic viscosity [η] (measured in decalin as a solvent at 135°C) of 1 to 6 dl/g, and

(4) a melting point Tm (measured by a differential scanning calorimeter) of 110 to 150°C.

According to the ninth aspect of the present invention, there is provided the butene copolymer resin composition as defined in the eighth aspect of the present invention, wherein the tensile modulus E (measured at 23°C) satisfies the relationship:

$$E\ (\text{MPa}) > 400 - 6.67 \times (\text{content of } \alpha\text{-olefin having 2 to 10 carbon atoms (provided that 1-butene is excluded)})$$

wherein the content of α-olefin having 2 to 10 carbon atoms (provided that 1-butene is excluded) is molar percentage based on the whole butene copolymer resin composition.

According to the tenth aspect of the present invention, there is provided the butene copolymer resin composition as defined in the eighth of ninth aspect of the present invention, which exhibits a 1/2 crystal transition time (measured by X-ray diffractometry) of 40 hr or less.

According to the eleventh aspect of the present invention, there is provided the butene copolymer resin composition as defined in any of the eighth to tenth aspects of the present invention, which further comprises a nucleating agent.

According to the twelfth aspect of the present invention, there is provided the butene copolymer resin composition as defined in the eleventh aspect of the present invention, wherein the nucleating agent is an amide compound.

The butene copolymer resin composition as defined in any of the eighth to twelfth aspects of the present invention exhibits:

B value determined by $^{13}$C-NMR of 0.90 to 1.08, this B value calculated by the formula:

$$\text{B value} = P_{OB}/(2P_O \cdot P_B)$$

wherein $P_{OB}$ represents the ratio of the number of butene-$\alpha$-olefin chains to the total number of chains, $P_B$ represents the molar fraction of butene component, and $P_O$ represents the molar fraction of $\alpha$-olefin component, and an isotactic pentad fraction determined by $^{13}$C-NMR of 91.5% or greater.

According to the thirteenth aspect of the present invention, there is provided the butene copolymer resin composition as defined in any of the eighth to twelfth aspects of the present invention, wherein the ratio (Mw/Mn) of weight-average molecular weight (Mw) to number-average molecular weight (Mn) is in the range of 2 to 7.9.

According to the fourteenth aspect of the present invention, there is provided the butene copolymer resin composition as defined in any of the eighth to thirteenth aspects of the present invention, wherein the copolymer units (b) derived from an $\alpha$-olefin having 2 to 10 carbon atoms (provided that 1-butene is excluded) for constituting the butene copolymer (A) are propylene units.

According to the fifteenth aspect of the present invention, there is provided the butene copolymer resin composition as defined in any of the eighth to fourteenth aspects of the present invention, which further comprises poly-1-butene (B).

According to the sixteenth aspect of the present invention, there is provided the butene copolymer resin composition as defined in any of the eighth to fifteenth aspects of the present invention, which comprises 40 to 90% by weight of butene copolymer (A) and 60 to 10% by weight of poly-1-butene (B).

According to the seventeenth aspect of the present invention, there is provided the butene copolymer resin composition as defined in any of the eighth to sixteenth aspects of the present invention, which comprises butene copolymer (A), or butene copolymer (A) together with poly-1-butene (B), these butene copolymer (A) and poly-1-butene (B) produced with the use of a catalyst system comprising:

a solid titanium catalyst component (c) containing titanium, magnesium, a halogen and a compound having at least two ether bonds represented by the formula:

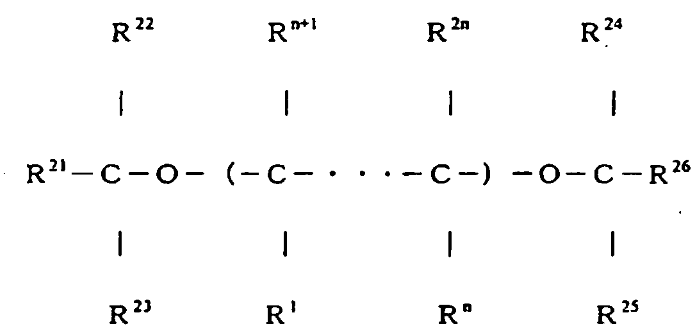

wherein each of $R^1$ to $R^{26}$ represents a substituent having at least one element selected from the group consisting of carbon, hydrogen, oxygen, a halogen, nitrogen, sulfur, phosphorus, boron and silicon, provided that any $R^1$ to $R^{26}$ substituents may form a ring other than benzene ring and that an atom other than carbon may be contained in a main

chain of the compound having at least two ether bonds, and wherein n is an integer satisfying the relationship $2 \leq n \leq 10$; and an organometallic compound catalyst component (d) containing a metal of Groups I to III of the periodic table.

According to the eighteenth aspect of the present invention, there is provided a molded item comprising the butene copolymer (A) as defined in any of the first to seventh aspects of the present invention or the butene copolymer resin composition as defined in any of the eighth to seventeenth aspects of the present invention.

According to the nineteenth aspect of the present invention, there is provided the molded item as defined in the eighteenth aspect of the present invention, which is in the form of a pipe.

According to the twentieth aspect of the present invention, there is provided the molded item as defined in the nineteenth aspect of the present invention, which exhibits a breaking time of 20 thousand hours or more in a hydrostatic test of pipe (measured at 95°C at a hoop stress of 6 MPa).

According to the twenty-first aspect of the present invention, there is provided the molded item as defined in the eighteenth aspect of the present invention, which is in the form of a pipe joint.

**Preferred Embodiments of the Invention**

The butene copolymer, resin composition comprising the same, molded item therefrom, solid titanium catalyst for producing the butene copolymer and process for producing the butene copolymer according to the present invention will be described in detail below.

(i) Butene copolymer

The butene copolymer (A) of the present invention is a copolymer of 1-butene and an α-olefin having 3 to 10 carbon atoms (provided that 1-butene is excluded). The molar constituent ratio of 1-butene to α-olefin having 3 to 10 carbon atoms (provided that 1-butene is excluded) is in the range of 99.9/0.1 to 80/20, preferably 99/1 to 90/10, and still preferably 99/1 to 92/8. It is especially preferred that the butene copolymer (A) be a copolymer of 1-butene and propylene.

The butene copolymer (A) of the present invention may be a mixture of a plurality of copolymers of 1-butene and an α-olefin having 3 to 10 carbon atoms (provided that 1-butene is excluded) having different α-olefin contents. For example, the butene copolymer (A) may be a mixture of two copolymers of 1-butene and an α-olefin having 3 to 10 carbon atoms (provided that 1-butene is excluded), the one having a molar constituent ratio of 1-butene/α-olefin ranging from 99.9/0.1 to 80/20 while the other having a molar constituent ratio of 1-butene/α-olefin ranging from 80/20 to 99.9/0.1. Moreover, the butene copolymer (A) may be a terpolymer - tetrapolymer further containing a third α-olefin in a small amount not detrimental to the properties of the butene copolymer (A). For example, the butene copolymer (A) may be a terpolymer - tetrapolymer consisting of a 1-butene/propylene copolymer containing a small amount of 4-methyl-1-pentene, ethylene, hexene, pentene, heptene or octene.

The butene copolymer (A) of the present invention has a tensile modulus E measured at 23°C of 345 MPa or greater, preferably 345 to 480 MPa, and still preferably 380 to 450 MPa.

Further, the butene copolymer (A) of the present invention has a tensile modulus E measured at 95°C of 133 MPa or greater, preferably 135 to 245 MPa.

The butene copolymer (A) of the present invention must exhibit either or both of these tensile moduli.

The resin composition comprising butene copolymer (A) according to the present invention has a tensile modulus E measured at 23°C of 360 MPa or greater, preferably 380 to 550 MPa, and still preferably 400 to 550 MPa.

Further, the resin composition comprising butene copolymer (A) according to the present invention has a tensile modulus E measured at 95°C of 138 MPa or greater, preferably 150 to 245 MPa.

The resin composition comprising butene copolymer (A) according to the present invention must exhibit either or both of these tensile moduli.

The tensile modulus E (measured at 23°C) of the butene copolymer (A) of the present invention preferably satisfies the relationship:

$$E\ (\text{MPa}) > 370 - 6.67 \times (\text{content of } \alpha\text{-olefin having 2 to 10 carbon atoms (provided that 1-butene is excluded)}),$$

still preferably

$$E\ (MPa) > 390 - 6.67 \times (\text{content of } \alpha\text{-olefin having 2 to 10 carbon atoms (provided that 1-butene is excluded)}).$$

In the formulae, the content of α-olefin having 2 to 10 carbon atoms (provided that 1-butene is excluded) is molar percentage based on the butene copolymer (A).

The tensile modulus E (measured at 23°C) of the resin composition comprising butene copolymer (A) according to the present invention preferably satisfies the relationship:

$$E\ (MPa) > 400 - 6.67 \times (\text{content of } \alpha\text{-olefin having 2 to 10 carbon atoms (provided that 1-butene is excluded)}),$$

still preferably

$$E\ (MPa) > 420 - 6.67 \times (\text{content of } \alpha\text{-olefin having 2 to 10 carbon atoms (provided that 1-butene is excluded)}).$$

In the formulae, the content of α-olefin having 2 to 10 carbon atoms (provided that 1-butene is excluded) is molar percentage based on the whole resin composition.

These inequalities can be obtained by plotting numerical data of Examples and Comparative Examples on a graph wherein the axis of abscissas indicates the content of α-olefin having 2 to 10 carbon atoms (provided that 1-butene is excluded) while the axis of ordinates indicates the tensile modulus E.

When the tensile modulus E of the butene copolymer (A) or the resin composition comprising the butene copolymer (A) falls within the above ranges, the pipe obtained by molding thereof has such an appropriate hardness that, upon laying of the pipe, the support for preventing the deformation by the self weight thereof is not excessive. Further, when the tensile modulus E satisfies the above inequalities with respect to the relationship with the content of α-olefin having 2 to 10 carbon atoms (provided that 1-butene is excluded), for example, the pipe flexibility at the time of laying and the pipe strength after the laying are reconciled to thereby ensure high practical usefulness of the pipe.

With respect to the butene copolymer (A) of the present invention, the ratio (Mw/Mn) of weight-average molecular weight (Mw) to number-average molecular weight (Mn) is in the range of 2 to 30, preferably 2 to 20, still preferably 2 to 7.9, yet still preferably 2 to 6, and optimally 2 to 5. When special importance is placed on the moldability, it is preferred that the ratio Mw/Mn be in the range of 3 to 30, especially 3 to 20, more especially 3 to 7.9, yet more especially 3 to 6, and most especially 3 to 5. With respect to the resin composition comprising the butene copolymer (A), the ratio Mw/Mn is in the range of 2 to 30, preferably 2 to 20, still preferably 2 to 7.9, yet still preferably 2 to 6, and optimally 2 to 5. When special importance is placed on the moldability, it is preferred that the ratio Mw/Mn be in the range of 3 to 30, especially 3 to 20, more especially 3 to 7.9, yet more especially 3 to 6, and most especially 3 to 5.

When the ratio Mw/Mn falls within these ranges, the pipe obtained by molding thereof is excellent in processability, particularly pipe extrudability.

With respect to the butene copolymer (A) or resin composition comprising butene copolymer (A) according to the present invention, the intrinsic viscosity [η] measured in decalin at 135°C is in the range of 1 to 6 dl/g, preferably 2 to 4 dl/g. When the intrinsic viscosity [η] falls within these ranges, the pipe obtained by molding thereof has satisfactory strength and is excellent in pipe extrudability.

The crystal melting points Tm, measured by a differential scanning calorimeter, of the butene copolymer (A) and resin composition comprising butene copolymer (A) according to the present invention are 150°C or below and from 110 to 150°C, respectively. When the crystal melting points Tm fall within these ranges, an excellent balance of processability and heat resistance can be realized with respect to the molding of a pipe therefrom. Herein, the melting point Tm refers to the melting point $Tm_1$ measured in the following manner.

Specifically, the butene copolymer (A) or resin composition comprising the butene copolymer (A) was sheeted by subjecting the same to melt compression at 200°C, maintaining the compression for 5min and cooling compression performed while cooling to room temperature at a cooling rate of about 10°C/min. The obtained sheet was allowed to

stand still at room temperature for one week and applied to a differential scanning calorimeter. The melting peak temperature of I-type crystal exhibited at heating from 20 °C to 200°C at a rate of 10°C/min was measured and designated as $Tm_1$. Because the sample having been subjected to measurement of $Tm_1$ exhibits a different peak upon further measurement performed in the same manner, it is absolutely necessary to prepare a new sample in the measurement of melting point $Tm_1$. For example, the melting point $Tm_2$ appearing when, after the measurement of melting point $Tm_1$, the sample has been allowed to stand still for 10 min, cooled from 200°C to 20°C at a rate of 10°C/min, allowed to stand still for 5 min and heated to 200°C at a rate of 10°C/min is different from the melting point $Tm_1$ and exhibits the melting peak of II-type crystal which lies on the low temperature side as compared with the melting point $Tm_1$.

With respect to the butene copolymer (A) or resin composition comprising butene copolymer (A) according to the present invention, it is preferred that the endothermic peak (melting point Tm) of butene copolymer (A) or resin composition as measured by a differential scanning calorimeter be substantially single.

Herein, the expression "endothermic peak is substantially single" means that the ratio of the area of main endothermic peak to the sum of endothermic peak areas around the melting point is 80% or greater. This ratio of main endothermic peak area is preferably 90% or greater, still preferably 95% or greater, and optimally 98% or greater.

With respect to the butene copolymer (A) or resin composition comprising butene copolymer (A) according to the present invention, it is preferred that the 1/2 crystal transition time (measured by X-ray diffractometry) be 40 hr or less, especially 30 hr or less.

With respect to the butene copolymer (A) of the present invention, the B value, as an index of random copolymerization, determined by NMR analysis is in the range of 0.92 to 1.1, especially 0.93 to 1.1, and that the isotactic pentad fraction determined by $^{13}C$-NMR be 91% or greater, especially 91 to 100%, more especially 92 to 100% and most especially 93 to 100%.

With respect to the resin composition comprising butene copolymer (A) according to the present invention, it is preferred that the above B value be in the range of 0.90 to 1.08, especially 0.91 to 1.08, and that the isotactic pentad fraction be 91.5% or greater, especially 91.5 to 100%, more especially 92 to 100% and most especially 93 to 100%.

The terminology "B value of composition" used herein means a value calculated by the formulae shown on page 63 of this specification (page 96 of English text) from the sum of the areas of peaks ascribed to components of the composition.

When the B value and isotactic pentad fraction fall within the above ranges, the tensile modulus of the butene copolymer (A) or resin composition comprising butene copolymer (A) is preferably increased.

The following Ziegler catalyst or metallocene catalyst provides a suitable catalyst for use in the production of butene copolymer (A), or butene copolymer (A) and poly-1-butene (B),according to the present invention. The former is preferred. For example, use is made of a catalyst for α-olefin polymerization composed of:

(c) a solid Group IVB metal catalyst component containing a metal of Group IVB of the periodic table, a halogen and magnesium, and
(d) an organometallic compound catalyst component containing a metal of Groups I to III of the periodic table, optionally together with
(e) an organosilicon compound catalyst component containing a cyclopentyl group, a cyclopentenyl group, a cyclopentadienyl group or a derivative of these groups.

The metal of Group IVB of the periodic table may be titanium, zirconium or hafnium. Titanium is preferred. The metal of Groups I to III of the periodic table is preferably aluminum.

As a Group IVB metal compound for use in the preparation of catalyst component (c), there can be mentioned, for example, compounds of the formula:

$$Ti(OR^a)_gX_{4-g}$$

wherein $R^a$ represents a hydrocarbon group having 1 to 10 carbon atoms, X represents a halogen atom, and g is a number satisfying the relationship $0 \le g \le 4$.

These titanium compounds may be used individually or in combination. The titanium compounds may be diluted with, for example, a hydrocarbon or a halogenated hydrocarbon before use.

A magnesium compound which can be employed in the preparation of catalyst component (c) may have or may not have reducing properties. Themagnesiumcompound, although can be used alone, may be used in the form of a complex compound with an organoaluminum compound described later. The magnesium compound may be a liquid or a solid.

Reducing magnesium compound is a magnesium compound having a magnesium-carbon bond or a magnesium-hydrogen bond.

Non reducing magnesium compound may be a compound derived from the above reducing magnesium compound or a compound derived in the preparation of catalyst component (c). The nonreducing magnesium compound is produced by bringing, for example, a compound of the formula Mg $(OR^b)_hX_{2-h}$ (wherein $R^b$ represents an alkyl group having 1 to 10 carbon atoms, X represents a halogen, and h is a number satisfying the relationship $0 \leq h \leq 2$) or the reducing magnesium compound into contact with a polysiloxane compound, a halogenous silane compound, a halogenous aluminum compound or a compound such as an ester or an alcohol. In the present invention, use can be made of a complex compound or double compound formed from the above magnesium compound and another metal, or a mixture of the magnesium compound and another metal compound. Further, use may be made of a mixtur.e of a plurality of magnesium compounds mentioned above.

When use is made of the nonreducing magnesium compound, the nonreducing magnesium compound in liquid form can be reacted with a liquid titanium compound in the presence of an electron donor to thereby precipitate a solid titanium composite. This method is described in, for example, Japanese Patent Laid-open Publication No. 58 (1983) -830006.

In the preparation of solid catalyst component (c), further, an electron donor is used. The electron donor can be, for example, an oxygen-containing electron donor such as an alcohol, a phenol, a ketone, an aldehyde, a carboxylic acid, an ester of organic or inorganic acid, an ether, an acid amide or an acid anhydride, or a nitrogenous electron donor such as an ammonia, an amine, a nitrile or an isocyanate.

Preferred compound is an ether. Especially preferred compound is a compound having two or more ether bonds, such as the following diether:

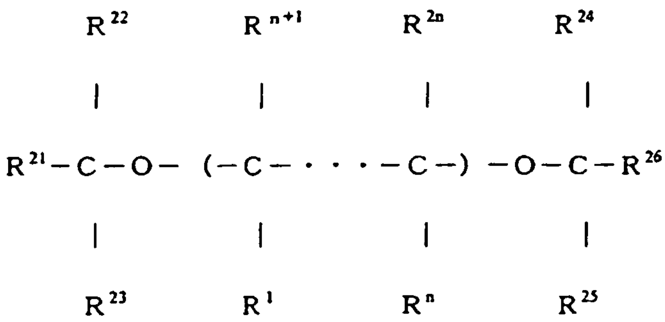

wherein each of $R^1$ to $R^{26}$ represents a substituent having at least one element selected from the group consisting of carbon, hydrogen, oxygen, a halogen, nitrogen, sulfur, phosphorus, boron and silicon, provided that any $R^1$ to $R^{26}$ substituents may cooperate to form a ring other than benzene ring and that an atom other than carbon may be contained in a main chain of the compound having at least two ether bonds, and wherein n is an integer satisfying the relationship $2 \leq n \leq 10$.

The above compound having two or more ether bonds can be, for example, 2-(2-ethylhexyl)-1,3-dimethoxypropane, 2-isopropyl-1,3-dirnethoxypropane, 2-cyclohexyl-1,3-dimethoxypropane, 2-(2-cyclohexylethyl)-1,3-dimethoxypropane, 2-methyl-2-cyclohexyl-1,3-dimethoxypropane or 2-isobutyl-2-isopropyl-1,3-dimethoxypropane. The compound is preferably a diether such as 2-isopropyl-2-isopentyl-1,3-dimethoxypropane, 2,2-diisobutyl-1,3-dimethoxypropane, 2,2-dicyclohexyl-1,3-dimethoxypropane, 2,2-bis(cyclohexylmethyl)-1,3-dimethoxypropane or 2-isobutyl-2-isopropyl-1,3-dimethoxypropane.

When the electron donor is an ester, preferred use is made of an ester of the formula:

or

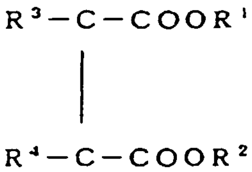、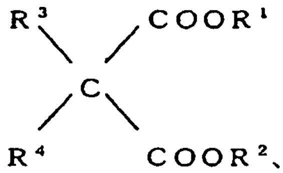、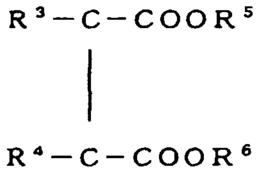

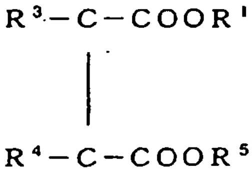

wherein $R^1$ represents an unsubstituted or substituted hydrocarbon group having 1 to 10 carbon atoms; each of $R^2$, $R^5$ and $R^6$ represents hydrogen or an unsubstituted or substituted hydrocarbon group having 1 to 10 carbon atoms; and each of $R^3$ and $R^4$ represents hydrogen or an unsubstituted or substituted hydrocarbon group having 1 to 10 carbon atoms, provided that $R^3$ and $R^4$ may be connected to each other.

It is preferred that at least one of $R^3$ and $R^4$ represents an unsubstituted or substituted hydrocarbon group. As the substituted hydrocarbon group represented by $R^1$ to $R^6$, there can be mentioned those having a heteroatom such as N, O or S, for example, having a group such as C-O-C, COOR, COOH, OH, $SO_3H$, -C-N-C- or $NH_2$. A preferred example of the organic acid ester is diisobutyl phthalate.

Further, there can be mentioned a monocarboxylic acid ester of the formula $R^7COOR^8$ (wherein each of $R^7$ and $R^8$ represents an unsubstituted or substituted hydrocarbyl group having 1 to 10 carbon atoms, at least one thereof being a branched chain (including alicyclic form) or ring-containing chain group). Also, a carbonic acid ester can be selected.

Although it is not necessary to use the electron donor as a starting material in the preparation of solid catalyst component (c), a compound which can be converted to the electron donor during the preparation of solid catalyst component (c) can be used as the same.

The solid catalyst component (c) used in the present invention is produced by bringing the above magnesium compound (including metallic magnesium), titanium compound and electron donor into mutual contact. The production can be accomplished by the use of the known process for preparing a highly active titanium catalyst component from a magnesium compound, a titanium compound and an electron donor. The above components may be brought into mutual contact in the presence of another reactive agent such as silicon, phosphorus or aluminum.

Although the usage of each of the above components added in the preparation of solid catalyst component (c) is varied depending on the employed preparation method and cannot be generally specified, for example, the electron donor is used in an amount of about 0.01 to 10 mol, preferably 0.05 to 5 mol, while the titanium compound is used in an amount of about 0.01 to 500 mol, preferably 0.05 to 300 mol, per mol of magnesium compound.

The thus obtained solidcatalyst component (c) contains magnesium, titanium, halogen and electron donor.

In the solid catalyst component (c), the atomic ratio of halogen/titanium is in the range of about 4 to 200, preferably about 5 to 100. The molar ratio of electron donor/titanium is in the range of about 0. 1 to 10, preferably about 0.2 to about 6. The atomic ratio of magnesium/titanium is in the range of about 1 to 100, preferably about 2 to 50.

The solid catalyst component (c) contains a magnesium halide of crystal size that is smaller than that of commercially available magnesium halide. The specific surface area thereof is about 50 $m^2/g$ or greater, preferably from about 60 to 1000 $m^2/g$, and still preferably from about 100 to 800 $m^2/g$. The solid catalyst component (c) is constituted of the above components linked together, so that the composition of the solid catalyst component (c) is substantially not changed by hexane washing.

The solid catalyst component (c), although can be used as it is, can be diluted with, for example, an inorganic or organic compound such as a silicon compound, an aluminum compound or a polyolefin before use.

The process for preparing a highly active titanium catalyst component is disclosed in, for example, Japanese Patent Laid-open Publication Nos. 50(1975)-108385, 50(1975)-126590, 51(1976)-20297, 51(1976)-28189, 51(1976)-64586, 51(1976)-92885, 51(1976)-136625, 52(1977)-87489, 52(1977)-100596, 52(1977)-147688, 52(1977)-104593, 53(1978)-2580, 53(1978)-40093, 53(1978)-40094, 53(1978)-43094, 55(1980)-135102, 55(1980)-135103, 55(1980)-152710, 56(1981)-811, 56(1981)-11908, 56(1981)-18606, 58(1983)-83006, 58(1983)-138705, 58(1983)-138706, 58 (1983)-138707, 58(1983)-138708, 58(1983)-138709, 58(1983)-138710, 58(1983)-138715, 60(1985)-23404, 61(1986)-21109, 61(1986)-37802 and 61(1986)-37803.

A typical example of the organometallic compound catalyst component (d) containing a metal of Groups I to III of the periodic table is an organoaluminum compound catalyst component, which is a compound having at least one aluminum-carbon bond in its molecule. For example, it is an organoaluminum compound of the general formula:

$$R^c_jAl(OR^d)_kH_mX_p \qquad (i)$$

wherein each of $R^c$ and $R^d$ represents a hydrocarbon group having 1 to 15 carbon atoms, provided that these may be identical with or different from each other; X represents a halogen atom; and j, k, m and p are numbers satisfying the relationships: $0 < j \leq 3$, $0 \leq k < 3$, $0 \leq m < 3$ and $0 \leq p < 3$, respectively, provided that $j + k + m + p = 3$. It is preferred that $R^c$ and $R^d$ be hydrocarbon groups each having 1 to 4 carbon atoms.

Also, use can be made of a complex alkylate of Group I metal and aluminum represented by the general formula:

$$M^1AlR^c_4 \qquad (ii)$$

wherein $M^1$ represents Li, Na or K, and $R^c$ is as defined above.

The organoaluminum compound of the general formula (i) can be, for example, any of those of the formulae:

$$R^c_jAl\ (OR^d)_k$$

wherein $R^c$ and $R^d$ are as defined above; and j and k are numbers satisfying the relationships: $1.5 \leq j \leq 3$ and $0 \leq k \leq 1.5$, respectively, provided that $j + k = 3$;

$$R^c_jAlX_p$$

wherein $R^c$ is as defined above; X represents a halogen atom; and j and p are numbers satisfying the relationships: $0 < j < 3$ and $0 < p < 3$, respectively, provided that $j + p = 3$;

$$R^c_jAlH_m$$

wherein $R^c$ is as defined above; H represents hydrogen; and j and m are numbers satisfying the relationships: $2 \leq j < 3$ and $0 < m \leq 1$, respectively, provided that $j + m = 3$; and

$$R^c_jAl(OR^d)_kX_p$$

wherein $R^c$ and $K^d$ are as defined above; X represents a halogen atom; and j, k and p are numbers satisfying the relationships: $0 < j \leq 3$, $0 \leq k < 3$ and $0 \leq p < 3$, respectively, provided that $j + k + p = 3$.

Also, use can be made of an alkylaluminum consisting of a plurality of aluminum compounds bonded together.

The organosilicon compound catalyst component (e) optionally added to the solid catalyst component (c) and the organometallic compound catalyst component (d) consists of an organosilicon compound containing a cyclopentyl group, a cyclopentenyl group, a cyclopentadienyl group or a derivative of these groups in its structure. The organosilicon compound can be, for example, a compound of the general formula:

$$R^eR^f_qSi(OR^g)_{3-q}$$

wherein $R^e$ represents a cyclopentyl group, a cyclopentenyl group, a cyclopentadienyl group or a derivative of these groups; each of $R^f$ and $R^g$ represents a hydrocarbon group having 1 to 10 carbon atoms, which may be crosslinked with an alkyl group or the like; and q is a number satisfying the relationship: $0 < q \leq 3$.

Each of $R^f$ and $R^g$ can be, for example, an alkyl group, a cycloalkyl group, an aryl group or an aralkyl group. Specific examples thereof include methyl, ethyl, isopropyl, phenyl, cyclopentyl, cyclopentenyl and cyclopentadienyl. $R^f$ and $R^g$ may be identical with or different from each other. It is preferred to employ an organosilicon compound wherein $R^e$ represents a cyclopentyl group, $R^f$ represents an alkyl group or a cyclopentyl group, and $R^g$ represents an alkyl group, especially methyl or ethyl.

Also, use can be made of an organosilicon compound of the general formula:

$$R^f_rSi(OR^g)_{4-r}$$

wherein $R^f$ and $R^g$ are as defined above, and r is a number satisfying the inequality: $0 < r < 4$.

$R^f$ and $R^g$, although not particularly limited, can be, for example, methyl, ethyl, isopropyl, phenyl, cyclopentyl,

cyclopentenyl or cyclopentadienyl. $R^f$ and $R^g$ may be identical with or different from each other.

Specifically, the organosilicon compound can be, for example, ethyltriethoxysilane, n-propyltriethoxysilane, phenyltriethoxysilane, dicyclohexyldimethoxysilane, dicyclopentyldimethoxysilane or cyclopentyldimethylmethoxysilane. Cyclohexylmethyldimethoxysilane or the like can preferably be employed.

The butene copolymer (A) and resin composition comprising butene copolymer (A) according to the present invention are produced by copolymerizing 1-butene and an α-olefin in the presence of the above catalyst. This copolymerization (principal polymerization) may be preceded by the following prepolymerization.

In the prepolymerization, generally, the solid catalyst component (c) is used in combination with at least part of the organometallic compound catalyst component (d). At that time, part or all of the organosilicon compound catalyst component (e) can be present therein.

In the prepolymerization, the catalyst can be used in a concentration which is significantly higher than the catalyst concentration in the principal polymerization system.

In the prepolymerization, the concentration of solid catalyst component (c) is generally in the range of, for example, about 0.5 to 100 mmol, preferably about 1 to 50 mmol, in terms of titanium atom per lit. of inert hydrocarbon medium described later.

The amount of organometallic compound catalyst component (d) may be such that 0.1 to 500 g, preferably 0.3 to 300 g of a polymer is formed per gram of solid catalyst component (c). For example, the amount is generally in the range of about 0.1 to 100 mol, preferably about 0.5 to 50 mol, per mol of titanium atom of solid catalyst component (c).

The prepolymerization is preferably performed under mild conditions with the α-olefin and above catalyst components added to an inert hydrocarbon medium.

As the inert hydrocarbon medium for use in the prepolymerization, there can be mentioned, for example, an aliphatic hydrocarbon such as propane, butane, pentane, hexane, heptane, octane, decane, dodecane or kerosine; an alicyclic hydrocarbon such as cyclopentane, cyclohexane or methylcyclopentane; an aromatic hydrocarbon such as benzene, toluene or xylene; a halogenated hydrocarbon such as ethylene chloride or chlorobenzene; or a mixture of these. Of these inert hydrocarbon mediums, an aliphatic hydrocarbon is preferably employed.

The α-olefin for use in the prepolymerization is one having 2 to 10 carbon atoms, preferably 3 to 10 carbon atoms, which may be identical with or different from the α-olefin to be used in the principal polymerization. A highly crystalline α-olefin polymer is obtained by the prepolymerization.

In the prepolymerization, the reaction temperature is not limited as long as a formed prepolymer is substantially not dissolved in the inert hydrocarbon medium. The reaction temperature is generally in the range of about -20 to +80°C, preferably about -20 to +60°C, and still preferably 0 to +40°C.

A molecular weight modifier such as hydrogen can be used in the prepolymerization.

The molecular weight modifier is used in such an amount that a polymer obtained by the prepolymerization has an intrinsic viscosity [η], measured in decalin at 135°C, of about 0.2 dl/g or greater, preferably about 0.5 to 10 dl/g.

The prepolymerization, as mentioned above, is carried out in such a manner that, for example, about 0.1 to 500 g, preferably about 0. 3 to 300 g of a polymer is formed per gram of titanium catalyst component.

The prepolymerization can be performed by a batch process or a continuous process.

The principal polymerization for producing a copolymer of 1-butene and α-olefin having 2 to 10 carbon atoms (excluding 1-butene) according to the present invention is preferably performed in the presence of the catalyst for olefin polymerization prepared from the above solid catalyst component (c), organometallic compound catalyst component (d) and organosilicon compound catalyst component (e) after the above prepolymerization or without conducting any prepolymerization.

The principal polymerization can be effected by any of liquid phase polymerization processes, such as a solution polymerization and a suspension polymerization, and gas phase polymerization processes. With respect to the solvent for use in the solution polymerization, although an inert hydrocarbon solvent is preferred, use can be made of an olefin which is liquid under polymerization conditions. The molar ratio of α-olefin to 1-butene in the vapor phase within a reaction vessel is in the range of 0.001 to 0.1, preferably 0.002 to 0.08.

The polymerization temperature is not limited as long as a formed polymer is substantially not dissolved in the inert hydrocarbon medium. The polymerization temperature is generally in the range of about -20 to +100°C, preferably about -20 to +80°C, and still preferably 0 to +40°C. The applied pressure is generally in the range of atmospheric pressure to $1 \times 10$ MPa, preferably $2 \times 10^{-1}$ to 5 MPa.

The principal polymerization can be performed by a batch process, a semicontinuous process or a continuous process. Further, the principal polymerization can be performed by a multistage polymerization process wherein polymerization conditions are varied according to stage.

In the production of the butene copolymer (A) of the present invention, for example, the solid catalyst component (c) is generally used in an amount of about 0.005 to 0.5 mmol, preferably about 0.01 to 0.5 mmol, in terms of titanium atom per lit. of polymerization volume. The organometallic compound catalyst component (d) is generally used, for example, in such an amount that metal atoms of the organometallic compound catalyst component (d) amount to about

1 to 2000 mol, preferably about 5 to 500 mol, per mol of titanium atoms contained in the solid catalyst component (c) of the polymerization system. Further, the organosilicon compound catalyst component (e) is generally used in an amount of 0.001 to 2 mol, preferably about 0.001 to 1 mol, and still preferably about 0.001 to 0.5 mol, in terms of Si atoms contained in the organosilicon compound catalyst component (e) per mol of metal atoms of the organometallic compound catalyst component (d).

(ii) Resin composition

The resin composition comprising butene copolymer (A) according to the present invention, although generally being a composition comprising the butene copolymer (A) of the present invention and another polymer, is preferably a resin composition comprising the butene copolymer (A) mixed with an α-olefin homopolymer and/or copolymer obtained by separate polymerization. The polymer mixed into the butene copolymer (A) of the present invention is preferably a homopolymer or copolymer of α-olefin having 2 to 20 carbon atoms, still preferably a homopolymer or copolymer of α-olefin having 4 to 20 carbon atoms. With respect to the composition ratio, preferably, 40 to 90% by weight of the butene copolymer (A) of the present invention is mixed with 60 to 10% by weight of other polymers. Still preferably, 60 to 90% by weight of the butene copolymer (A) is mixed with 40 to 10% by weight of other polymers.

When it is intended to mold, for example, pipes from the resin composition, it is preferred that the mixed (co) polymer be a butene copolymer different from the butene copolymer (A) of the present invention, especially poly-1-butene (B), and more especially poly-1-butene (B) produced by polymerization with the use of the catalyst suitable for the production of butene copolymer (A). The poly-1-butene (B) is mixed in a proportion of 30% by weight or less, preferably 30 to 5% by weight, based on the total resin weight. With respect to the α-olefin content of butene copolymer (A) in pipes, an extrudability enhancement can favorably be attained by effecting such a mixing that the propylene content is greater than 1 mol% but less than 10 mol%.

In the present invention, a mixture of butene copolymer (A) wherein the content of α-olefin having 3 to 10 carbon atoms (excluding 1-butene) is greater than 1 mol% and poly-1-butene (B) wherein the content of α-olefin having 3 to 10 carbon atoms (excluding 1-butene) is 1 mol% or less is especially preferred.

The mixed poly-1-butene (B) is preferably one whose molecular weight in terms of intrinsic viscosity [η] is in the range of 1 to 5 dl/g. When a composition of butene/propylene copolymer (A) and poly-1-butene (B) is employed, it is preferred that the molecular weights of butene/propylene copolymer (A) and poly-1-butene (B) satisfy such a relationship that the ratio of the intrinsic viscosity $[\eta]_B$ of poly-1-butene (B) to the intrinsic viscosity $[\eta]_{BP}$ of butene/propylene copolymer (A), $[\eta]_B/[\eta]_{BP}$, is in the range of 0.1 to 1.0, especially 0.2 to 0.9, and more especially 0.3 to 0.8.

The butene copolymer (A) or resin composition comprising butene copolymer (A) according to the present inventionmay contain other polymers, for example, a flexible α-olefin copolymer, such as an ethylene random copolymer (e.g., ethylene/propylene random copolymer) or a styrene block copolymer (e.g., SEBS, SBS or SEPS), in an amount not detrimental to the properties to be attained in the present invention.

Moreover, the butene copolymer (A) or resin composition according to the present invention may be incorporated with various commonly added compounding agents such as a heat stabilizer, a weathering stabilizer, a slip agent, a nucleating agent, a pigment, a dye and a lubricant.

As the above nucleating agent, there can be mentioned, for example, polyethylene wax, polypropylene wax, polyethylene, polypropylene, polystyrene, nylon (polyamide), polycaprolactone, talc, titanium oxide, 1,8-naphthalimide, phthalimide, alizarin, quinizarin, 1,5-dihydroxy-9,10-anthraquinone, quinalizarin, sodium 2-anthraquinonesulfonate, 2-methyl-9,10-anthroquinone, anthrone, 9-methylanthracene, anthracene, 9,10-dihydroanthracene, 1,4-naphthoquinone, 1,1-dinaphthyl, stearic acid, calcium stearate, sodium stearate, potassium stearate, zinc oxide, hydroquinone, anthranilic acid, ethylenebisstearylamide and sorbitol derivatives. Further, there can be mentioned polycarboxylic acid amide compounds, polyamine amide compounds and polyamino acid amide compounds described in Japanese Patent Laid-open Publication No. 8(1996)-48838, and vinylcycloalkane polymers described in Japanese Patent Publication No. 5(1993)-58019.

Of these, amide compounds can especially preferably be employed.

Although the method of preparing the resin composition of the present invention is not particularly limited, for example, the preparation can be performed by the method in which the butene copolymer (A) and polymers to be mixed are melt mixed by means of a single-screw extruder or a multi-screw extruder, or by the method in which melt kneading by means of a Banbury mixer or a kneader and granulation or pulverization are sequentially carried out. Further, there can be mentioned the method in which the butene copolymer (A) and polymers to be mixed are produced by separate polymerizations and in which the thus obtained polymer solutions are directly mixed together under agitation.

(iii) Molded item

The butene copolymer (A) or resin composition comprising butene copolymer (A) according to the present

invention is molded by customary techniques using, for example, a single-screw extruder or a multi-screw extruder. The butene copolymer (A) or resin composition can be formed into molded items having a wide variety of configurations, examples of which include a pipe, a pipe joint, a sheet and a box.

With respect to the pipe obtained by molding the butene copolymer (A) or resin composition comprising butene copolymer (A) according to the present invention by customary techniques using, for example, a single-screw extruder, the ratio of outside diameter to thickness is in the range of 5 to 20, preferably 6 to 18. The breaking time exhibited in a hydrostatic test of the pipe (measured at 95°C at a hoop stress of 6 MPa) is 20 thousand hours or more. This means that the pipe has an extremely high pressure resistance strength.

## Examples

The present invention will be further illustrated below with reference to the following Examples, which in no way limit the scope of the invention.

Example 1

[Preparation of solid titanium catalyst component (c-1)]

6.0 kg (63 mol) of anhydrous magnesium chloride, 26.6 lit. of decane and 29.2 lit. (189mol) of 2-ethylhexyl alcohol were heated at 140°C for 4 hr so as to effect a reaction thereof, thereby obtaining a homogeneous solution. Subsequently, 1.59 kg (7.88 mol) of 2-isopropyl-2-isobutyl-1,3-dimethoxypropane was added to the homogeneous solution, and agitated at 110°C for 1 hr.

The thus obtained homogeneous solution was cooled to room temperature, and 37.0 kg thereof was dropped into 120 lit. (1080mol) of titanium tetrachloride maintained at -24°C over a period of 2.5 hr. The thus obtained solution was heated over a period of 6 hr, and, when the temperature thereof reached 110°C, 0.68 kg (3.37 mol) of 2-isopropyl-2-isobutyl-1,3-dimethoxypropane was added thereto.

Further, the solution was agitated at 110°C for 2 hr so as to effect a reaction. Solid was collected from the reaction mixture by hot filtration, placed in 132 lit. of titanium tetrachloride, and agitated into a slurry.. The slurry was heated at 110°C for 2 hr so as to effect a further reaction.

Solid was again collected from the reaction mixture by hot filtration and washed with 90°C decane and hexane. Washing was terminated when titanium compounds were no longer detected in the washing fluid. Thus, solid titanium catalyst component (c-1) was obtained.

Part of a hexane slurry of solid titanium catalyst component (c-1) was sampled and dried, and a dried sample was analyzed. The quantitative composition by weight of solid titanium catalyst component (c-1) exhibited 3.0% of titanium, 57% of chlorine, 17% of magnesium and 18.0% of 2-isopropyl-2-isobutyl-1,3-dimethoxypropane.

[Copolymerization of 1-butene and propylene]

Copolymerization of 1-butene and propylene was carried out by feeding a continuous polymerization reactor of 200 lit. internal volume with 73 lit./hr of hexane, 16 kg/hr of 1-butene, 0.07 kg/hr of propylene, 10 Nlit./hr of hydrogen, 0. 38 mmol (in terms of titanium atom)/hr of solid titanium catalyst component (c-1), 38 mmol/hr of triethylaluminum and 1.3mmol/hr of cyclohexylmethyldimethoxysilane. Thus, a copolymer was obtained at a rate of 4.8 kg/hr. In that copolymerization, the temperature was 60°C, the average residence time 0.8 hr, and the total pressure $3\times10^{-1}$ MPa·G. The properties of obtained copolymer (propylene content, intrinsic viscosity [η], molecular weight distribution Mw/Mn, melting point Tm, isotactic pentad fraction, 1/2 crystal transition time, tensile modulus E and B value) are listed in Table 1.

[Production of resin composition]

The thus obtained 1-butene/propylene copolymer was mixed with poly-1-butene (melting point: 124°C, intrinsic viscosity: 1.2, Mw/Mn: 3.6, 1/2 crystal transition time: 15 hr and isotactic pentad fraction: 94.1%) in a weight ratio of 4: 1. 100 parts by weight of obtained resin composition was incorporated with 0.2 part by weight of high density polyethylene (MFR: 13 g/10 min and density: 965 kg/$m^3$) as a nucleating agent and further with a heat stabilizer, and melt blended by means of a single-screw extruder of 40 mm screw diameter. Thus, there was obtained a resin composition, the properties of which are listed in Table 1.

[Production of pipe]

The thus obtained resin composition was incorporated with heat stabilizer (phenolic, benzotriazole-based,

metallic soap) and pelletized by means of a single-screw extruder. Obtained pellets were extruded into pipes of 27 mm inside diameter and 2.4 mm wall thickness by means of a pipe forming machine of 90 mm screw diameter under such conditions that the preset temperature, cooling water temperature and pipe forming speed were 180°C, 11°C and 3 m/min, respectively.

A hydrostatic test of pipes was performed, and the results thereof are also listed in Table 1.

[Measuring method]

The properties of butene/propylene copolymer, resin composition containing butene/propylene copolymer and pipes were measured in the following manner.

(1) Content of propylene in butene/propylene copolymer

30 to 50 mg of copolymer was dissolved in 0.5 $cm^3$ of hexachlorobutadiene and measured by means of superconducting NMR (model GSH-270, manufactured by JEOL LTD.) under such conditions that the measuring temperature was 115 to 120°C, the measured range 180 ppm, the cumulative frequency 500 to 10,000, the pulse separation 4.5 to 5 sec, and the pulse duration 45°.

(2) Melting point $Tm_1$

Copolymer was sandwiched by means of 50 μm thick polyester sheets, 100 μm thick aluminum plates and 1 mm thick iron plates with the use of a metal frame of 0.1 mm thickness, heated at 190°C for 5 min, deaerated under 5 MPa, maintained at 5 MPa for 5 min, and cooled by means of a cooling press water-cooled at 20°C under 5 MPa for 5 min. Thus, a sheet was obtained.

The sheet was allowed to stand still at room temperature for 7 days, and 4 to 5 mg thereof was charged in a sample pan of differential scanning calorimeter (model DSC-2, manufactured by Perkin-Elmer Corp.). The temperature was raised from 20°C to 200°C at a rate of 10°C/min. The temperature at melting peak apex during the temperature rise was designated as $Tm_1$. The melting point is a scale of heat resistance.

(3) Tensile modulus E

Copolymer was formed into a 2 mm thick sheet in the same manner as in the measurement of melting point except that a metal frame of 2 mm thickness was used, allowed to stand still for 7 days, and used as a measuring sample. The obtained sample was measured by the use of universal testing machine, model ASTM IV, manufactured by Instron under such conditions that the chuck spacing was 64 mm, and the stress rate 50 mm/min.

The tensile modulus E at 23°C indicates the hardness in use condition and is a scale of the pressure resistance strength of pipe. The tensile modulus E at 95°C indicates the hardness at high temperature and is a scale of the heat resistance.

(4) Molecular weight distribution Mw/Mn

(i) Using standard polystyrenes of known molecular weights (monodisperse polystyrenes, produced by Tosoh Corporation), GPC (gel permeation chromatography) counts corresponding to polystyrene molecular weights M were measured, and a calibration curve of molecular weight M and EV (elution volume) was prepared.

(ii) Gel permeation chromatogram of a sample was measured by GPC, and, with the use of calibration curve prepared in (i) above, the number average molecular weight defined by the formula $Mn = \Sigma MiNi / \Sigma Ni$ and the weight average molecular weight defined by the formula $Mw = \Sigma Mi^2Ni / \Sigma MiNi$ were calculated. Thus, Mw/Mn was determined.

The molecular weight distribution is a scale of flexibility and extrudability.

(5) Intrinsic viscosity [η]

The specific viscosity of a decalin solution of each sample was measured at 135°C by the use of Atlantic viscometer, and the intrinsic viscosity [η] was calculated from the specific viscosity.

The intrinsic viscosity is a scale of strength and extrudability.

(6) 1/2 crystal transition time

The ratio of I-type crystal (100) face reflection peak intensity to II-type crystal (200) face reflection peak intensity was measured by the use of X-ray diffractometer (model RU-300 manufactured by Rigaku Denki Co., Ltd., Cu target, 50 kV, 300 mA), and the time required to reach 1/2 of an intensity ratio saturation value was determined.
The 1/2 crystal transition time is a scale of the cure time after molding.

(7) B value

BB, BP and PP diad molar fractions were determined by measuring 40. 2 ppm (ascribed to BB diad), 43.3 ppm (ascribed to BP diad) and 46.4 ppm (ascribed to PP diad) skeletal methylene peak areas on the NMR spectrum obtained by means of NMR analyzer (model LA-500 FT-NMR, manufactured by JEOL LTD.) under such conditions that the measuring temperature: 120°C, the solvent: o-dichlorobenzene, the internal standard: deuterobenzene, the pulse mode: proton complete decoupling, the pulse duration: 45°, and the pulse separation: 5.5 sec. From the obtained diad molar fractions, the B (1-butene) content was calculated by the formula B = BB + BP / 2, the P (propylene) content by the formula P =PP+BP/2, and the B value by the formula Bvalue=BP/(2×B×P). Herein, BB represents a 1-butene chain, BP a bonding of 1-butene and propylene, and PP a propylene chain.
The B value is a scale of the randomness of copolymer. The increase of B value means the shortening of 1-butene chain or propylene chain, and hence means the increase of the uniformity of 1-butene and propylene distribution.

(8) Isotactic pentad fraction

The isotactic pentad fraction was measured by means of NMR analyzer (model LA-500 FT-NMR, manufactured by JEOL LTD.) under such conditions that the measuring temperature: 120°C, the solvent: hexachlorobutadiene, and the internal standard: deuterobenzene.
The isotactic pentad fraction indicates the stereoregularity of (co)polymer.

(9) Hydrostatic strength of pipe

The hydrostatic strength of pipe was measured at 95°C and at a hoop stress of 6 MPa in accordance with ISO 167. The results are also listed in Table 1. In the Examples, the hydrostatic strengths exceeded 20 thousand hours. Thus, the pipes have satisfactory practical strength.

Example 2

[Preparation of solid titanium catalyst component (c-2)]

4.28 kg (45 mol) of anhydrous magnesium chloride, 26.6 lit. of decane and 21.1 lit. (135mol) of 2-ethylhexyl alcohol were heated at 140°C for 5 hr so as to effect a reaction thereof, thereby obtaining a homogeneous solution. Subsequently, 1 kg (6.78 mol) of phthalic anhydride was added to the homogeneous solution, and agitated at 130°C for 1 hr to thereby obtain a homogeneous solution.
The thus obtained homogeneous solution was cooled to room temperature, and was dropped into 120 lit. (1080 mol) of titanium tetrachloride maintained at -20°C over a period of 2 hr. The thus obtained solution was heated over a period of 4 hr, and, when the temperature thereof reached 110°C, 3.02 lit. (11.3 mol) of diisobutyl phthalate was added thereto.
Further, the solution was agitated at 110°C for 2 hr so as to effect a reaction. Solid was collected from the reaction mixture by hot filtration, placed in 165 lit. of titanium tetrachloride, and agitated into a slurry. The slurry was heated at 110°C for 2 hr so as to effect a further reaction.
Solid was again collected from the reaction mixture by hot filtration and washed with 110°C decane and hexane. Washing was terminated when titanium compounds were no longer detected in the washing fluid. Thus, solid titanium catalyst component (c-2) was obtained.
Part of a hexane slurry of solid titanium catalyst component (c-2) was sampled and dried, and a dried sample was analyzed. The quantitative composition by weight of solid titanium catalyst component (c-2) exhibited 2.5% of titanium, 58% of chlorine, 18% of magnesium and 13.8% of diisobutyl phthalate.

[Copolymerization of 1-butene and propylene]

A 1-butene/propylene copolymer was produced by carrying out copolymerization in the same manner as in

Example 1, except that dicyclopentyldimethoxysilane was used in place of cyclohexylmethyldimethoxysilane as organosilicon compound catalyst component (e) and that the copolymerization was conducted at 57.5°C. The copolymerization conditions are listed in Table 1.

[Production of resin composition and pipe]

In the same manner as in Example 1, the thus obtained copolymer was mixed with poly-1-butene, a nucleating agent and additives to thereby obtain a resin composition, and the resin composition was formed into a pipe.

The properties of obtained copolymer and resin composition and the pipe hydrostatic test results are listed in Table 1.

Example 3

Poly-1-butene having the properties specified in Table 1 was produced according to the same process for producing a butene/propylene copolymer as in Example 2, except that, as the organometallic compound catalyst component (d), triisobutylaluminum was used in place of triethylaluminum, and cyclohexylmethyldimethoxysilane was used in place of dicyclopentyldimethoxysilane and that the polymerization was carried out under conditions specified in Table 1.

In the same manner as in Example 1 except that 0.05 part by weight of ethylenebisstearylamide was used in place of 0.2 part by weight of high density polyethylene as the nucleating agent, the obtained polymer was mixed with poly-1-butene to thereby obtain a resin composition, and the resin composition was formed into a pipe.

The properties of obtained polymer and resin composition and the pipe hydrostatic test results are listed in Table 1.

Comparative Example 1

Poly-1-butene having the properties specified in Table 1 was produced according to the same process for producing a butene/propylene copolymer as in Example 2, except that propylene as a copolymer component was not used, that, as the organometallic compound catalyst component (d), triisobutylaluminum was used in place of triethylaluminum, and cyclohexylmethyldimethoxysilane was used in place of dicyclopentyldimethoxysilane, and that the polymerization was carried out under conditions specified in Table 1.

In the same manner as in Example 1, the thus obtained polymer was mixed with poly-1-butene to thereby obtain a resin composition, and the resin composition was formed into a pipe.

The properties of obtained polymer and resin composition and the pipe hydrostatic test results are listed in Table 1.

Comparative Example 2

A butene/propylene copolymer having the properties specified in Table 1 was produced according to the same process for producing a butene/propylene copolymer as in Example 2, except that, as the organometallic compound catalyst component (d), triisobutylaluminum was used in place of triethylaluminum, and cyclohexylmethyldimethoxysilane was used in place of dicyclopentyldimethoxysilane, and that the copolymerization was carried out under conditions specified in Table 1.

In the same manner as in Example 1, the thus obtained copolymer was mixed with poly-1-butene to thereby obtain a resin composition, and the resin composition was formed into a pipe.

The properties of obtained copolymer and resin composition and the pipe hydrostatic test results are listed in Table 1.

Table 1

| | | Example 1 | Example 2 | Example 3 | Comp. Ex. 1 | Comp. Ex. 2 |
|---|---|---|---|---|---|---|
| item | unit | butene copolymer (A) | | | | |
| Ti catalyst | - | c-1 | c-2 | c-2 | c-2 | c-2 |
| Al co-catalyst | - | TEA | TEA | TIBA | TIBA | TIBA |
| donor | - | *1 | *2 | *1 | *1 | *1 |
| Al/Ti | molar ratio | 100 | 100 | 100 | 100 | 100 |

(continued)

| | | Example 1 | Example 2 | Example 3 | Comp. Ex. 1 | Comp. Ex. 2 |
|---|---|---|---|---|---|---|
| item | unit | butene copolymer (A) | | | | |
| Al/donor ' | molar ratio | 30 | 30 | 30 | 30 | 30 |
| pressure | $kg/cm^2$ | 3 | 3 | 3 | 3 | 3 |
| polymn. temp. | °C | 60 | 57.5 | 60 | 60 | 60 |
| residence time | h | 0.8 | 0.8 | 1 | 1 | 1 |
| amt. of polymer formed | kg/h | 4.8 | 4.8 | 4.8 | 4.8 | 4.8 |
| activity | kg/mol ·Ti | 10000 | 10000 | 3000 | 3000 | 3000 |
| C3 content | mol% | 2.8 | 3.6 | 5.4 | 0 | 5.4 |
| m.p. | °C | 126 | 120 | 118 | 122 | 118 |
| intrinsic viscosity | dl/g | 3 | 3.1 | 3 | 3.1 | 3 |
| Mw/Mn | - | 3.5 | 3.5 | 3.8 | 3.8 | 3.8 |
| isotactic pentad fraction | % | 93.3 | 93.5 | 89.5 | 90.8 | 89.6 |
| tensile modulus 23°C | MPa | 400 | 410 | 273 | 300 | 275 |
| tensile modulus 95°C | MPa | 116 | 123 | 86 | 90 | 86 |
| 370-6.67xC3 | MPa | 351 | 346 | 334 | 370 | 334 |
| 1/2 crystal transition time | h | 23 | 10 | 7 | 48 | 7 |
| B value | - | 0.95 | 0.98 | 0.91 | - | 0.91 |
| item | unit | resin compsn. | | | | |
| nucleating agent HDPE*3 | pts.wt | 0.2 | 0.2 | 0 | 0.2 | 0.2 |
| nucleating agent EBSA*4 | pts.wt | 0 | 0 | 0.05 | 0 | 0 |
| C3 content | mol% | 2.2 | 2.9 | 4.3 | 0 | 4.3 |
| m.p. | °C | 126 | 125 | 126 | 126 | 123 |
| intrinsic viscosity | dl/g | 2.5 | 2.5 | 2.5 | 2.5 | 2.5 |
| Mw/Mn | - | 4.02 | 4.03 | 4.1 | 4.05 | 4.1 |
| isotactic pentad fraction | % | 93.7 | 93.8 | 89.8 | 91.2 | 89.8 |
| 1/2 crystal transition time | h | 20 | 8 | 5 | 40 | 5 |
| tensile modulus 23°C | MPa | 480 | 520 | 380 | 320 | 300 |
| tensile modulus 23°C | MPa | 145 | 160 | 140 | 120 | 115 |
| 400-6.67xC3 | MPa | 385 | 381 | 371 | 400 | 371 |
| hydrostatic strength 95°C×6MPa | h | >24526 | >24526 | 21574 | 13985 | 11725 |
| B value | - | 0.93 | 0.96 | 0.89 | - | 0.89 |

Note) Formulation of resin composition: butene copolymer/poly-1-butene = 4/1 (weight ratio),
*1: cyclohexylmethyldimethoxysilane,
*2: dicyclopentyldimethoxysilane,
*3: high density polyethylene (MFR: 13g/10 min, and density: 965 $kg/m^3$), and
*4: ethylenebisstearylamide.

Example 4

[Preparation of solid titanium catalyst component (A'-1)]

6.0 kg (63 mol) of anhydrous magnesium chloride, 26.6 lit. of decane and 29.2 lit. (189 mol) of 2-ethylhexanol were heated at 140°C for 4 hr so as to effect a reaction thereof, thereby obtaining a homogeneous magnesium compound solution (I). Subsequently, 1.59 kg (1.88 mol) of 2-isopropyl-2-isobutyl-1,3-dimethoxypropane was added to the solution (I), and agitated at 110°C for 1 hr.

The thus obtained homogeneous magnesium/polyether solution (II) was cooled to room temperature, and 37.0 kg thereof was dropped into 120 lit. (1080 mol) of titanium tetrachloride maintained at -24 °C over a period of 2.5 hr. The thus obtained magnesium/titanium solution (III) was heated over a period of 6 hr, and, when the temperature thereof reached 110°C, 0.68 kg (3.37 mol) of 2-isopropyl-2-isobutyl-1,3-dimethoxypropane was added thereto. Further, the resultant solution (IV) was agitated at 110°C for 2 hr so as to effect a reaction. Solid was collected from the reaction mixture by hot filtration, placed in 132 lit. of titanium tetrachloride, and agitated into a slurry. The slurry was heated at 110°C for 2 hr so as to effect a further reaction.

Solid was again collected from the reaction mixture by hot filtration and washed with 110°C decane and hexane. Washing was terminated when titaniumcompounds were no longer detected in the washing fluid. Thus, solid titanium catalyst (A'-1) was obtained.

Part of a hexane slurry of solid titanium catalyst (A'-1) was sampled and dried, and a dried sample was analyzed. The quantitative composition by weight of solid titanium catalyst (A'-1) exhibited 3.0% of titanium, 17% of magnesium, 57% of chlorine and 18.0% of 2-isopropyl-2-isobutyl-1,3-dimethoxypropane. Diisobutyl phthalate was not detected.

[Polymerization]

Copolymerization of 1-butene and propylene was carried out by feeding a continuous polymerization reactor of 200 lit. internal volume with 73 lit./hr of hexane, 16 kg/hr of 1-butene, 0.07 kg/hr of propylene, 10 Nlit./hr of hydrogen, 0.38 mmol (in terms of titanium atom)/hr of solid titanium catalyst (A'-1), 38 mmol/hr of triethylaluminum (B') and 1.3 mmol/hr of cyclohexylmethyldimethoxysilane (CMMS) (C'). Thus, a copolymer was obtained at a rate of 4.8 kg/hr. In that copolymerization, the temperature was 60°C, the average residence time 0.8 hr, and the total pressure $3\times10^{-1}$ MPa·g. The properties of obtained copolymer (propylene content, melting point, intrinsic viscosity [η] and molecular weight distribution) are listed in Table 2.

(1) The content of propylene in butene/propylene copolymer was measured in the following manner.
30 to 50 mg of obtained copolymer was dissolved in 0. 5 $cm^3$ of hexachlorobutadiene and measured by means of superconducting NMR (model GSH-270, manufactured by JEOL LTD.) under such conditions that the measuring temperature was 115 to 120°C, the measured range 180 ppm, the cumulative frequency 500 to 10, 000, the pulse separation 4.5 to 5 sec, and the pulse duration 45°.
(2) The melting point $Tm_1$ was measured in the following manner.
Copolymer was sandwiched by means of 50 μm thick polyester sheets, 100 μm thick aluminum plates and 1 mm thick iron plates with the use of a metal frame of 0.1 mm thickness, heated at 190°C for 5 min, deaerated under 5 MPa, maintained at 5 MPa for 5 min, and cooled by means of a cooling press water-cooled at 20°C under 5 MPa for 5 min. Thus, a sheet was obtained. The sheet was allowed to stand still at room temperature for 7 days, and 4 to 5 mg thereof was charged in a sample pan of differential scanning calorimeter (model DSC-2, manufactured by Perkin-Elmer Corp.). The temperature was raised from 20 °C to 200 °C at a rate of 10 °C/min. The temperature at melting peak apex during the temperature rise was designated as $Tm_1$. The melting point is a scale of heat resistance.
(3) The intrinsic viscosity [η] was measured in the following manner.
The specific viscosity of a decalin solution of each sample was measured at 135°C by the use of Atlantic viscometer, and the intrinsic viscosity [η] was calculated from the specific viscosity.
The intrinsic viscosity is a scale of strength and extrudability.
(4) The amount of 2-butene formed was measured in the following manner.

The amount of 2-butene formed during polymerization was determined by measuring the amount of 2-butene contained in the gas phase within the polymerization reactor by gas chromatography.

Comparative Example 3

[Preparation of solid titanium catalyst component (A'-2)]

4.28 kg (45 mol) of anhydrous magnesium chloride, 22.5 lit. of decane and 21.1 lit. (135 mol) of 2-ethylhexanol were heated at 140°C for 5 hr so as to effect a reaction thereof, thereby obtaining a homogeneous magnesium compound solution (I). Subsequently, 1 kg (6.78 mol) of phthalic anhydride was added to the solution (I), and agitated at 130°C for 1 hr to thereby effect dissolution of phthalic anhydride.

The thus obtained homogeneous magnesium/phthalic anhydride solution was cooled to room temperature, and 75 lit. of the homogeneous solution was dropped into 120 lit. (1080 mol) of titanium tetrachloride maintained at -20°C over a period of 2 hr. The thus obtained magnesium/titanium solution was heated over a period of 4 hr, and, when the temperature thereof reached 110°C, 3.02 lit. (11.3 mol) of diisobutyl phthalate was added thereto. Further, the solution was agitated at 110°C for 2 hr so as to effect a reaction. Solid was collected from the reaction mixture by hot filtration, placed in 165 lit. of titanium tetrachloride, and agitated into a slurry. The slurry was heated at 110°C for 2 hr so as to effect a further reaction.

Solid was again collected from the reaction mixture by hot filtration and washed with 110°C decane and hexane. Washing was terminated when titaniumcompounds were no longer detected in the washing fluid. Thus, solid titanium catalyst (A'-2) was obtained.

Part of a hexane slurry of solid titanium catalyst (A'-2) was sampled and dried, and a dried sample was analyzed. The quantitative composition by weight of solid titanium catalyst (A'-2) exhibited 2.4% of titanium, 20% of magnesium, 60% of chlorine and 13.0% of diisobutyl phthalate. Therefore, the content of carboxylic acid derivative is 13.0%.

With respect to the content of phthalic acid derivatives, it was measured by gas chromatography. Specifically, about 0.5 g of a sample was weighed into a 50 ml measuring flask. Acetone was added thereto so as to dissolve the sample. An internal standard substance was added and agitated. 13% aqueous ammonia was dropped thereinto so as to effect a decomposition. The liquid was allowed to stand still so as to effect a separation, and the upper layer portion was taken out as a sample. The sample was separated into component fractions with the use of a fused silica capillary column as a separation column, and the amounts thereof were determined by an internal standard method.

[Polymerization]

A butene/propylene copolymer was produced by conducting copolymerization in the same manner as in Example 4, except that solid titanium catalyst (A'-2) was used. The results are listed in Table 2.

Table 2

| | | Unit | Example 4 | Comp.Ex.3 |
|---|---|---|---|---|
| Solid titanium catalyst and activity | Designation | | A'-1 | A'-2 |
| | (a'): Mg | wt.% | 17 | 20 |
| | (b'): Ti | wt.% | 3.0 | 2.4 |
| | (c'): halogen | wt.% | 57 | 60 |
| | (d'): polyether | wt.% | 18.0 | 0 |
| | (e'): hydrocarbon | wt.% | 2.2 | 2.0 |
| | (f'-1): ethylhexanol | wt.% | 2.8 | 2.6 |
| | (f'-2): carboxylic acid deriv. (diisobutyl phthalate) | wt.% | 0 | 13.0 |
| | : polymn. activity | g/mmol -Ti | 10000 | 3000 |
| | : amt. of 2-butene formed | ppm | 24 | 43 |
| Properties of polymer | (1) propylene content | mol% | 2.8 | 2.8 |
| | (2) m.p. | °C | 126 | 120 |
| | (3) intrinsic visc. | dl/g | 3 | 3 |
| | (4) Mw/Mn | | 3.5 | 3.8 |

A molded item which is excellent in heat resistance, low-temperature properties and handling easiness and which exhibits extremely enhanced thermal creep property can be obtained from the butene copolymer or resin composition comprising butene copolymer according to the present invention. Therefore, the molded item of the present invention, especially pipe, is excellent in not only heat resistance, low-temperature properties and handling easiness but also thermal creep property.

Moreover, a polymer or copolymer of an α-olefin having 4 or more carbon atoms, including the above butene copolymer, which is characterized by uniform particle size, less fine powder, high bulk density and substantially not containing carboxylic acids can be easily produced with high polymerization activity by the use of the solid titanium catalyst and α-olefin polymerization process according to the present invention.

## Industrial Applicability

A molded item which is excellent in heat resistance, low-temperature properties and handling easiness and which exhibits extremely enhanced thermal creep property can be obtained from the butene copolymer or resin composition comprising butene copolymer according to the present invention. Therefore, the molded item of the present invention, especially pipe, is excellent in not only heat resistance, low-temperature properties and handling easiness but also thermal creep property, thereby ensuring high industrial applicability.

## Claims

1. A butene copolymer (A) comprising 99.9 to 80 mol% of copolymer units (a) derived from 1-butene and 0.1 to 20 mol% of copolymer units (b) derived from an α-olefin having 3 to 10 carbon atoms (provided that 1-butene is excluded), said butene copolymer (A) having:

   (1a) a tensile modulus E (measured at 23°C) of 345 MPa or greater and/or
   (1b) a tensile modulus E (measured at 95°C) of 133 MPa or greater, and
   (2) a ratio (Mw/Mn) of weight-average molecular weight (Mw) to number-average molecular weight (Mn) of 2 to 30,
   (3) an intrinsic viscosity [η] (measured in decalin as a solvent at 135°C) of 1 to 6 dl/g,
   (4) a melting point Tm (measured by a differential scanning calorimeter) of 150°C or below,
   (5) B value determined by $^{13}$C-NMR of 0.92 to 1.1, said B value calculated by the formula:

   $$B\ value = P_{OB}/(2P_O \cdot P_B)$$

   wherein $P_{OB}$ represents the ratio of the number of butene-α-olefin chains to the total number of chains, $P_B$ represents the molar fraction of butene component, and $P_O$ represents the molar fraction of α-olefin component, and
   (6) an isotactic pentad fraction determined by $^{13}$C-NMR of 91% or greater.

2. The butene copolymer (A) as claimed in claim 1, wherein the tensile modulus E (measured at 23°C) satisfies the relationship:

   $$E\ (MPa) > 370 - 6.67 \times (\text{content of } \alpha\text{-olefin having 3 to 10 carbon atoms (provided that 1-butene is excluded)})$$

   wherein the content of α-olefin having 3 to 10 carbon atoms (provided that 1-butene is excluded) is molar percentage based on the butene copolymer (A).

3. The butene copolymer (A) as claimed in claim 1 or 2, which exhibits a 1/2 crystal transition time (measured by X-ray diffractometry) of 40 hr or less.

4. The butene copolymer (A) as claimed in any of claims 1 to 3, wherein the ratio (Mw/Mn) of weight-average molecular weight (Mw) to number-average molecular weight (Mn) is in the range of 2 to 7.9.

5. The butene copolymer (A) as claimed in any of claims 1 to 4, wherein the copolymer units (b) derived from an α-olefin having 3 to 10 carbon atoms (provided that 1-butene is excluded) are propylene units.

6. The butene copolymer (A) as claimed in any one of claims 1 to 5, which exhibits only one endothermic peak (melting point Tm) in a measurement by means of a differential scanning calorimeter.

**7.** The butene copolymer (A) as claimed in any one of claims 1 to 6, produced with the use of a catalyst system comprising:

a solid titanium catalyst component (c) containing titanium, magnesium, a halogen and a compound having at least two ether bonds represented by the formula:

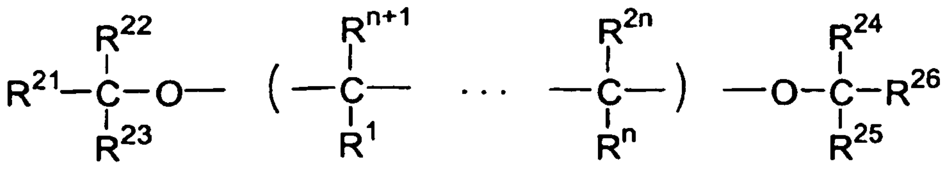

wherein each of $R^1$ to $R^{26}$ represents a substituent having at least one element selected from the group consisting of carbon, hydrogen, oxygen, a halogen, nitrogen, sulfur, phosphorus, boron and silicon, provided that any $R^1$ to $R^{26}$ substituents may form a ring other than benzene ring and that an atom other than carbon may be contained in a main chain of the compound having at least two ether bonds, and wherein n is an integer satisfying the relationship $2 \leq n \leq 10$; and
an organometallic compound catalyst component (d) containing a metal of Groups I to III of the periodic table.

**8.** A butene copolymer resin composition comprising a butene copolymer (A) comprising 99.9 to 80 mol% of copolymer units (a) derived from 1-butene and 0.1 to 20 mol% of copolymer units (b) derived from an α-olefin having 3 to 10 carbon atoms (provided that 1-butene is excluded), said butene copolymer resin composition having:

(1a) a tensile modulus E (measured at 23°C) of 360 MPa or greater and/or
(1b) a tensile modulus E (measured at 95°C) of 138 MPa or greater, and
(2) a ratio (Mw/Mn) of weight-average molecular weight (Mw) to number-average molecular weight (Mn) of 2 to 30,
(3) an intrinsic viscosity [η] (measured in decalin as a solvent at 135°C) of 1 to 6 dl/g,
(4) a melting point Tm (measured by a differential scanning calorimeter) of 110 to 150°C,
(5) B value determined by $^{13}C$-NMR of 0.90 to 1.08, said B value calculated by the formula:

$$\text{B value} = P_{OB}/(2P_O \cdot P_B)$$

wherein $P_{OB}$ represents the ratio of the number of butene-α-olefin chains to the total number of chains, $P_B$ represents the molar fraction of butene component, and $P_O$ represents the molar fraction of α-olefin component, and
(6) an isotactic pentad fraction determined by $^{13}C$-NMR of 91.5% or greater.

**9.** The butene copolymer resin composition as claimed in claim 8, wherein the tensile modulus E (measured at 23°C) satisfies the relationship:

$$E\ (\text{MPa}) > 400 - 6.67 \times (\text{content of } \alpha\text{-olefin having 3 to 10 carbon atoms (provided that 1-butene is excluded)})$$

wherein the content of α-olefin having 3 to 10 carbon atoms (provided that 1-butene is excluded) is molar percentage based on the whole butene copolymer resin composition.

**10.** The butene copolymer resin composition as claimed in claim 8 or 9, which exhibits a 1/2 crystal transition time (measured by X-ray diffractometry) of 40 hr or less.

**11.** The butene copolymer resin composition as claimed in any of claims 8 to 10, which further comprises a nucleating agent.

**12.** The butene copolymer resin composition as claimed in claim 11, wherein the nucleating agent is an amide compound.

**13.** The butene copolymer resin composition as claimed in any one of claims 8 to 12, wherein the ratio (Mw/Mn) of weight-average molecular weight (Mw) to number-average molecular weight (Mn) is in the range of 2 to 7.9.

**14.** The butene copolymer resin composition as claimed in any of claims 8 to 13, wherein the copolymer units (b) derived from an $\alpha$-olefin having to 10 carbon atoms (provided that 1-butene is excluded) are propylene units.

**15.** The butene copolymer resin composition as claimed in any of claims 8 to 14, which further comprises poly-1-butene (B).

**16.** The butene copolymer resin composition as claimed in any of claims 8 to 15, which comprises 40 to 90% by weight of butene copolymer (A) and 60 to 10% by weight of poly-1-butene (B).

**17.** The butene copolymer resin composition as claimed in any one of claims 8 to 16, which comprises butene copolymer (A), or butene copolymer (A) together with poly-1-butene (B), said butene copolymer (A) and said poly-1-butene (B) produced with the use of a catalyst system comprising:

a solid titanium catalyst component (c) containing titanium, magnesium, a halogen and a compound having at least two ether bonds represented by the formula:

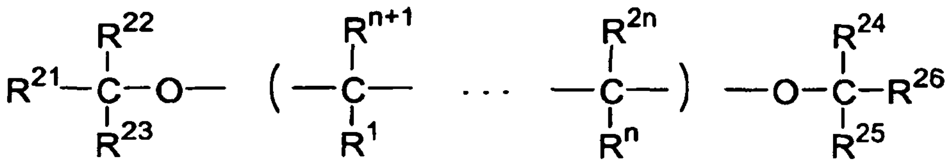

wherein each of $R^1$ to $R^{26}$ represents a substituent having at least one element selected from the group consisting of carbon, hydrogen, oxygen, a halogen, nitrogen, sulfur, phosphorus, boron and silicon, provided that any $R^1$ to $R^{26}$ substituents may form a ring other than benzene ring and that an atom other than carbon may be contained in a main chain of the compound having at least two ether bonds, and wherein n is an integer satisfying the relationship $2 \leq n \leq 10$; and
an organometallic compound catalyst component (d) containing a metal of Groups I to III of the periodic table.

**18.** A molded item comprising the butene copolymer (A) according to any of claims 1 to 7 or the butene copolymer resin composition according to any of claims 8 to 17.

**19.** The molded item as claimed in claim 18, which is in the form of a pipe.

**20.** The molded item as claimed in claim 19, which exhibits a breaking time of 20 thousand hours or more in a hydrostatic test of pipe (measured at 95°C at a hoop stress of 6 MPa).

**21.** The molded item as claimed in claim 18, which is in the form of a pipe joint.

**Patentansprüche**

**1.** Butencopolymer (A) umfassend 99,9 bis 80 Mol-% Copolymereinheiten (a) abgeleitet von 1-Buten und 0,1 bis 20 Mol-% Copolymereinheiten (b) abgeleitet von einem $\alpha$-Olefin mit 3 bis 10 Kohlenstoffatomen (unter der Voraussetzung, dass 1-Buten ausgeschlossen ist), wobei das Buten-Copolymer (A) besitzt:

(1a) einen Zugmodul E (gemessen bei 23°C) von 345 MPa oder größer und/oder
(1b) einen Zugmodul E (gemessen bei 95°C) von 133 MPa oder größer, und
(2) ein Verhältnis (Mw/Mn) des gewichtsgemittelten Molekulargewichts (Mw) zu dem zahlengemittelten Molekulargewicht (Mn) von 2 bis 30,

(3) eine intrinsische Viskosität [η] (gemessen in Dekalin als Lösungsmittel bei 135°C) von 1 bis 6 dl/g,
(4) einen Schmelzpunkt Tm (gemessen durch ein Differentialscanningkalorimeter) von 150°C oder niedriger,
(5) einen B-Wert bestimmt durch $^{13}$C-NMR von 0,92 bis 1,1, wobei der B-Wert berechnet wird durch die Formel:

$$\text{B-Wert} = P_{OB}/(2P_O \cdot P_B)$$

worin $P_{OB}$ das Verhältnis der Anzahl an Buten-α-Olefinketten zur Gesamtzahl der Ketten darstellt, $P_B$ den Molanteil der Butenkomponente darstellt und Po den Molanteil der α-Olefinkomponente darstellt, und
(6) einen Anteil der isotaktischen Pentade bestimmt durch $^{13}$C-NMR von 91% oder größer.

2. Butencopolymer (A) gemäß Anspruch 1, worin der Zugmodul E (gemessen bei 23°C) die Beziehung erfüllt:

E (MPa) > 370 - 6.67 x (Gehalt an α-Olefin mit 3 bis 10 Kohlenstoffatomen (unter der Voraussetzung, dass 1-Buten ausgeschlossen ist)), wobei der Gehalt von α-Olefin mit 3 bis 10 Kohlenstoffatomen (unter der Voraussetzung, dass 1-Buten ausgeschlossen ist) der molare Prozentsatz basierend auf dem Butencopolymer (A) ist.

3. Butencopolymer (A) gemäß Anspruch 1 oder 2, das eine ½-Kristallisationsübergangszeit (gemessen durch Röntgendiffraktometrie) von 40 Stunden oder weniger aufweist.

4. Butencopolymer (A) gemäß einem der Ansprüche 1 bis 3, wobei das Verhältnis (Mw/Mn) des gewichtsgemittelten Molekulargewichts (Mw) zum zahlengemittelten Molekulargewicht (Mn) im Bereich von 2 bis 7,9 liegt.

5. Butencopolymer (A) gemäß einem der Ansprüche 1 bis 4, worin die von einem α-Olefin mit 3 bis 10 Kohlenstoffatomen (unter der Voraussetzung, dass 1-Buten ausgeschlossen ist) abgeleiteten Copolymereinheiten (B) Propyleneinheiten sind.

6. Butencopolymer (A) gemäß einem der Ansprüche 1 bis 5, das nur einen endothermen Peak (Schmelzpunkt Tm) in der Messung mittels eines Differentialscanningkalorimeters aufweist.

7. Butencopolymer (A) gemäß einem der Ansprüche 1 bis 6, hergestellt unter Verwendung eines Katalysatorsystems umfassend:

eine feste Titankatalysatorkomponente (c) enthaltend Titan, Magnesium, ein Halogen und eine Verbindung mit zumindest zwei Etherbindungen, dargestellt durch die Formel:

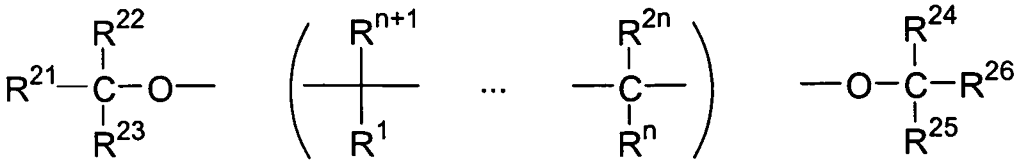

worin $R^1$ bis $R^{26}$ einen Substituenten mit zumindest einem Element ausgewählt aus der Gruppe bestehend aus Kohlenstoff, Wasserstoff, Sauerstoff, einem Halogen, Stickstoff, Schwefel, Phosphor, Bor und Silizium darstellen, unter der Voraussetzung, dass jeder der Substituenten $R^1$ bis $R^{26}$ einen Ring außer einem Benzolring bilden kann und dass ein Atom außer Kohlenstoff in der Hauptkette der Verbindung mit zumindest zwei Etherbindungen enthalten sein kann, und worin n eine ganze Zahl ist, die die Beziehung $2 \leq n \leq 10$ erfüllt; und
eine Organometallverbindungskatalysatorkomponente (d) enthaltend ein Metall der Gruppen I bis III des Periodensystems.

8. Butencopolymerharzzusammensetzung umfassend ein Butencopolymer (A) umfassend 99,9 bis 80 Mol-% Copolymereinheiten (a) abgeleitet von 1-Buten und 0,1 bis 20 Mol-% Copolymereinheiten (b) abgeleitet von einem α-Olefin mit 3 bis 10 Kohlenstoffatomen (unter der Voraussetzung, dass 1-Buten ausgeschlossen ist), wobei das

Buten-Copolymer (A) besitzt:

(1a) einen Zugmodul E (gemessen bei 23°C) von 360 MPa oder größer und/oder
(1b) einen Zugmodul E (gemessen bei 95°C) von 138 MPa oder größer, und
(2) ein Verhältnis (Mw/Mn) des gewichtsgemittelten Molekulargewichts (Mw) zu dem zahlengemittelten Molekulargewicht (Mn) von 2 bis 30,
(3) eine intrinsische Viskosität [η] (gemessen in Dekalin als Lösungsmittel bei 135°C) von 1 bis 6 dl/g,
(4) einen Schmelzpunkt Tm (gemessen durch ein Differentialscanningkalorimeter) von 110 bis 150°C,
(5) einen B-Wert bestimmt durch $^{13}$C-NMR von 0,90 bis 1,08, wobei der B-Wert berechnet wird durch die Formel:

$$\text{B-Wert} = P_{OB}/(2P_O \cdot P_B)$$

worin $P_{OB}$ das Verhältnis der Anzahl an Buten-α-Olefinketten zur Gesamtzahl der Ketten darstellt, $P_B$ den Molanteil der Butenkomponente darstellt und Po den Molanteil der α-Olefinkomponente darstellt, und
(6) einen Anteil der isotaktischen Pentade bestimmt durch $^{13}$C-NMR von 91,5% oder größer.

**9.** Butencopolymerharzzusammensetzung gemäß Anspruch 8, worin der Zugmodul E (gemessen bei 23°C) die Beziehung erfüllt:

E (MPa) > 400 - 6.67 x (Gehalt an α-Olefin mit 3 bis 10 Kohlenstoffatomen (unter der Voraussetzung, dass 1-Buten ausgeschlossen ist)), wobei der Gehalt von α-Olefin mit 3 bis 10 Kohlenstoffatomen (unter der Voraussetzung, dass 1-Buten ausgeschlossen ist) der molare Prozentsatz basierend auf der gesamten Butencopolymerharzzusammensetzung ist.

**10.** Butencopolymerharzzusammensetzung gemäß Anspruch 8 oder 9, die eine ½-Kristallisationsübergangszeit (gemessen durch Röntgendiffraktometrie) von 40 Stunden oder weniger aufweist.

**11.** Butencopolymerharzzusammensetzung gemäß einem der Ansprüche 8 bis 10, die ferner einen Keimbildner enthält.

**12.** Butencopolymerharzzusammensetzung gemäß Anspruch 11, worin der Keimbildner eine Amidverbindung ist.

**13.** Butencopolymerharzzusammensetzung gemäß einem der Ansprüche 8 bis 12, wobei das Verhältnis (Mw/Mn) des gewichtsgemittelten Molekulargewichts (Mw) zum zahlengemittelten Molekulargewicht (Mn) im Bereich von 2 bis 7,9 liegt.

**14.** Butencopolymerharzzusammensetzung gemäß einem der Ansprüche 8 bis 13, worin die von einem α-Olefin mit 3 bis 10 Kohlenstoffatomen (unter der Voraussetzung, dass 1-Buten ausgeschlossen ist) abgeleiteten Copolymereinheiten (b) Propyleneinheiten sind.

**15.** Butencopolymerharzzusammensetzung gemäß einem der Ansprüche 8 bis 14, die ferner Poly-1-buten (B) umfasst.

**16.** Butencopolymerharzzusammensetzung gemäß einem der Ansprüche 8 bis 15, die 40 bis 90 Gew.-% des Butencopolymers (A) und 60 bis 10 Gew.-% Poly-1-buten (B) umfasst.

**17.** Butencopolymerharzzusammensetzung gemäß einem der Ansprüche 8 bis 16, die das Butencopolymer (A) oder das Butencopolymer (A) zusammen mit Poly-1-buten (B) umfasst, wobei das Butencopolymer (A) und das Poly-1-buten (B) unter Verwendung eines Katalysatorsystems hergestellt sind, umfassend:

eine feste Titankatalysatorkomponente (c) enthaltend Titan, Magnesium, ein Halogen und eine Verbindung mit zumindest zwei Etherbindungen, dargestellt durch die Formel:

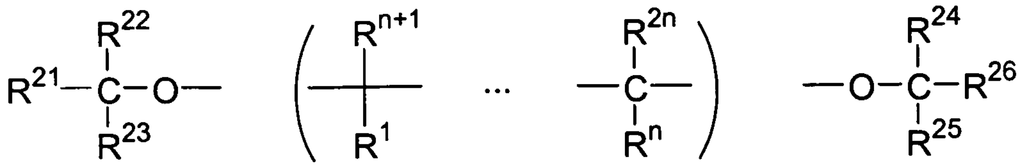

worin $R^1$ bis $R^{26}$ einen Substituenten mit zumindest einem Element ausgewählt aus der Gruppe bestehend aus Kohlenstoff, Wasserstoff, Sauerstoff, einem Halogen, Stickstoff, Schwefel, Phosphor, Bor und Silizium darstellen, unter der Voraussetzung, dass jeder der Substituenten $R^1$ bis $R^{26}$ einen Ring außer einem Benzolring bilden kann und dass ein Atom außer Kohlenstoff in der Hauptkette der Verbindung mit zumindest zwei Etherbindungen enthalten sein kann, und worin n eine ganze Zahl ist, die die Beziehung $2 \leq n \leq 10$ erfüllt; und
eine Organometallverbindungskatalysatorkomponente (d) enthaltend ein Metall der Gruppen I bis III des Periodensystems.

**18.** Geformter Gegenstand umfassend das Butencopolymer (A) gemäß einem der Ansprüche 1 bis 7 oder die Butencopolymerharzzusammensetzung gemäß einem der Ansprüche 8 bis 17.

**19.** Geformter Gegenstand gemäß Anspruch 18, der in Form einer Leitung ist.

**20.** Geformter Gegenstand gemäß Anspruch 19, der eine Bruchzeit von 20.000 Stunden oder mehr in einem hydrostatischen Test der Leitung (gemessen bei 95°C bei einer Ringspannung von 6 MPa) aufweist.

**21.** Geformter Gegenstand gemäß Anspruch 18, der in Form einer Leitungsverbindung ist.

**Revendications**

**1.** Copolymère de butène (A) comprenant entre 99,9 et 80 % en moles d'unités de copolymère (a) dérivées du1-butène et entre 0,1 et 20 % en moles \d'unités de copolymère (b) dérivées d'une α-oléfine ayant 3 à 10 atomes de carbone (à condition que le 1-butène soit exclu), ledit copolymère de butène (A) ayant :

(1a) un module d'élasticité en traction E (mesuré à 23°C) de 345 MPa ou davantage et/ou
(1b) un module d'élasticité en traction E (mesuré à 95°C) de 133 MPa ou davantage, et
(2) un rapport (Mw/Mn) de la masse moléculaire moyenne en poids (Mw) à la masse moléculaire moyenne en nombre (Mn) de 2 à 30,
(3) une viscosité intrinsèque [η] (mesurée dans la décaline comme solvant à 135°C) de 1 à 6 dl/g,
(4) un point de fusion Tm (mesuré par un calorimètre à balayage différentiel) de 150°C ou inférieur,
(5) une valeur B déterminée par $^{13}$C-RMN de 0,92 à 1,1, ladite valeur B étant calculée par la formule :

$$\text{valeur B} = P_{OB}/(2P_O \,.\, P_B)$$

dans laquelle $P_{OB}$ représente le rapport du nombre de chaînes de butène-a-oléfine au nombre total de chaînes, $P_B$ représente la fraction molaire du composant butène, et $P_O$ représente la fraction molaire du composant α-oléfine, et
(6) une fraction pentade isotactique déterminée par $^{13}$C-RMN de 91 % ou davantage.

**2.** Copolymère de butène (A) selon la revendication 1, dans lequel le module d'élasticité en traction E (mesuré à 23°C) obéit à la relation :

E (MPa) > 370 – 6,67 x (teneur d'α-oléfine ayant 3 à 10 atomes de carbone (à condition que le 1-butène soit exclu))

dans laquelle la teneur d'α-oléfine ayant 3 à 10 atomes de carbone (à condition que le 1-butène soit exclu) est un pourcentage molaire basé sur le copolymère de butène (A).

**3.** Copolymère de butène (A) selon la revendication 1 ou 2, qui présente un 1/2 temps de transition du cristal (mesuré par diffractométrie aux rayons X) de 40 heures ou moins.

**4.** Copolymère de butène (A) selon l'une quelconque des revendications 1 à 3, dans lequel le rapport (Mw/Mn) de la masse moléculaire moyenne en poids (Mw) à la masse moléculaire moyenne en nombre (Mn) se situe dans la plage de 2 à 7,9.

**5.** Copolymère de butène (A) selon l'une quelconque des revendications 1 à 4, dans lequel les unités de copolymère (b) dérivées d'une α-oléfine ayant 3 à 10 atomes de carbone (à condition que le 1-butène soit exclu) sont des unités de propylène.

**6.** Copolymère de butène (A) selon l'une quelconque des revendications 1 à 5, qui présente un seul pic endothermique (point de fusion Tm) dans une mesure au moyen d'un calorimètre à balayage différentiel.

**7.** Copolymère de butène (A) selon l'une quelconque des revendications 1 à 6, produit en utilisant un système catalyseur comprenant :

un composant catalyseur solide au titane (c) contenant du titane, du magnésium, un halogène et un composé ayant au moins deux liaisons éther représenté par la formule :

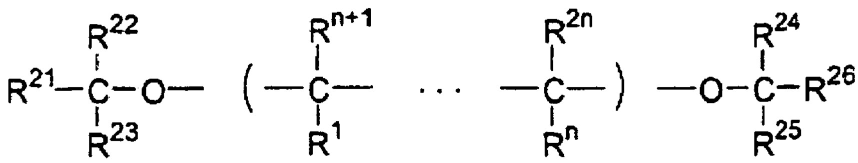

dans laquelle chacun de $R^1$ à $R^{26}$ représente un substituant ayant au moins un élément selectionné dans le groupe constitué par le carbone, l'hydrogène, l'oxygène, un halogène, l'azote, le soufre, le phosphore, le bore et le silicium, à condition que l'un quelconque des substituants $R^1$ à $R^{26}$ puisse former un cycle autre qu'un cycle benzénique et qu'un atome autre que le carbone puisse être contenu dans une chaîne principale du composé ayant au moins deux liaisons éther, et dans laquelle n représente un nombre entier obéissant à la relation $2 \leq n \leq 10$ ; et
un composant organométallique (d) du composé catalyseur contenant un métal des Groupes I à III du tableau périodique.

**8.** Composition de résine de copolymère de butène comprenant un copolymère de butène (A) comprenant entre 99,9 et 80 % en moles d'unités de copolymère (a) dérivées du 1-butène et entre 0,1 et 20 % en moles d'unités de copolymère (b) dérivées d'une α-oléfine ayant 3 à 10 atomes de carbone (à condition que le 1-butène soit exclu), ladite composition de résine de copolymère de butène ayant :

(1a) un module d'élasticité en traction E (mesuré à 23°C) de 360 MPa ou davantage et/ou
(1 b) un module d'élasticité en traction E (mesuré à 95°C) de 138 MPa ou davantage, et
(2) un rapport (Mw/Mn) de la masse moléculaire moyenne en poids (Mw) à la masse moléculaire moyenne en nombre (Mn) de 2 à 30,
(3) une viscosité intrinsèque [η] (mesurée dans la décaline comme solvant à 135°C) de 1 à 6 dl/g,
(4) un point de fusion Tm (mesuré par un calorimètre à balayage différentiel) de 110 à 150°C,
(5) une valeur B déterminée par $^{13}$C-RMN de 0,90 à 1,08, ladite valeur B étant calculée par la formule :

$$\text{valeur B} = P_{OB}/(2P_O \,.\, P_B)$$

dans laquelle $P_{OB}$ représente le rapport du nombre de chaînes de butène-α-oléfine au nombre total de chaînes,

$P_B$ représente la fraction molaire du composant butène, et $P_O$ représente la fraction molaire du composant α-oléfine, et
(6) une fraction pentade isotactique déterminée par $^{13}$C-RMN de 91,5 % ou davantage.

**9.** Composition de résine de copolymère de butène selon la revendication 8, dans laquelle le module d'élasticité en traction E (mesuré à 23°C) obéit à la relation :

E (MPa) > 400 – 6,67 x (quantité d'α-oléfine ayant 3 à 10 atomes de carbone (à condition que le 1-butène soit exclu))

dans laquelle la quantité d'α-oléfine ayant 3 à 10 atomes de carbone (à condition que le 1-butène soit exclu) est un pourcentage molaire basé sur l'ensemble de la composition de résine de copolymère de butène.

**10.** Composition de résine de copolymère de butène selon la revendication 8 ou 9, qui présente un 1/2 temps de transition du cristal (mesuré par diffractométrie aux rayons X) de 40 heures ou moins.

**11.** Composition de résine de copolymère de butène selon l'une quelconque des revendications 8 à 10, qui comprend en outre un agent de nucléation.

**12.** Composition de résine de copolymère de butène selon la revendication 11, dans laquelle l'agent de nucléation est un composé amide.

**13.** Composition de résine de copolymère de butène selon l'une quelconque des revendications 8 à 12, dans laquelle le rapport (Mw/Mn) de la masse moléculaire moyenne en poids (Mw) à la masse moléculaire moyenne en nombre (Mn) se situe dans la plage de 2 à 7,9.

**14.** Composition de résine de copolymère de butène selon l'une quelconque des revendications 8 à 13, dans laquelle les unités de copolymère (b) dérivées d'une α-oléfine ayant 3 à 10 atomes de carbone (à condition que le 1-butène soit exclu) sont des unités de propylène.

**15.** Composition de résine de copolymère de butène selon l'une quelconque des revendications 8 à 14, qui comprend en outre du poly-1-butène (B).

**16.** Composition de résine de copolymère de butène selon l'une quelconque des revendications 8 à 15, qui comprend 40 à 90 % en poids de copolymère de butène (A) et 60 à 10 % en poids de poly-1-butène (B).

**17.** Composition de résine de copolymère de butène selon l'une quelconque des revendications 8 à 16, qui comprend un copolymère de butène (A), ou un copolymère de butène (A) avec du poly-1-butène (B), ledit copolymère de butène (A) et ledit poly-1-butène (B) étant produits en utilisant un système catalyseur comprenant :

un composant catalyseur solide au titane (c) contenant du titane, du magnésium, un halogène et un composé ayant au moins deux liaisons éther représenté par la formule :

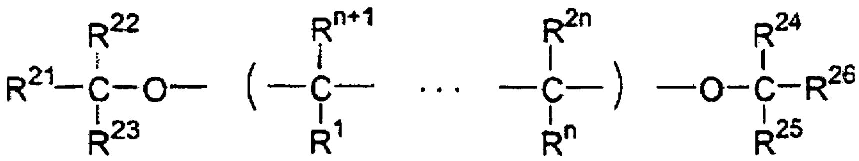

dans laquelle chacun de $R^1$ à $R^{26}$ représente un substituant ayant au moins un élément selectionné dans le groupe constitué par le carbone, l'hydrogène, l'oxygène, un halogène, l'azote, le soufre, le phosphore, le bore et le silicium, à condition que l'un quelconque des substituants $R^1$ à $R^{26}$ puisse former un cycle autre qu'un cycle benzénique et qu'un atome autre que le carbone puisse être contenu dans une chaîne principale du composé ayant au moins deux liaisons éther, et dans laquelle n représente un nombre entier obéissant à la relation $2 \leq n \leq 10$ ; et

un composant organométallique (d) du composé catalyseur contenant un métal des Groupes I à III du tableau périodique.

**18.** Produit moulé comprenant le copolymère de butène (A) selon l'une quelconque des revendications 1 à 7 ou la composition de résine de copolymère de butène selon l'une quelconque des revendications 8 à 17.

**19.** Produit moulé selon la revendication 18, qui est en forme de tuyau.

**20.** Produit moulé selon la revendication 19, qui présente un temps de rupture de vingt mille heures ou davantage dans un test hydrostatique de tuyau (mesuré à 95°C à une contrainte périphérique de 6 MPa).

**21.** Produit moulé selon la revendication 18, qui est en forme de raccord de tuyau.